# EUROPEAN PATENT SPECIFICATION

(11) **EP 4 296 133 B1**
(45) Date of publication and mention of the grant of the patent: **27.08.2025**
(21) Application number: 21928420.5
(22) Date of filing: 01.03.2021
(51) Int. Cl.: B60W 30/095, B60W 40/00, B60W 30/18, B60W 60/00, B60W 50/00

(54) **INTELLIGENT DRIVING METHOD AND APPARATUS**
INTELLIGENTES ANTRIEBSVERFAHREN UND VORRICHTUNG
PROCÉDÉ ET APPAREIL DE CONDUITE INTELLIGENTE

(43) Date of publication of application: 27.12.2023
(73) Proprietor: Shenzhen Yinwang Intelligent Technologies Co., Ltd., Shenzhen, Guangdong 518129 (CN)
(72) Inventor: WANG, Xu, Shenzhen, Guangdong 518129 (CN); WANG, Xiaoqi, Shenzhen, Guangdong 518129 (CN)
(74) Representative: Maiwald GmbH
(86) International application number: PCT/CN2021/078497
(87) International publication number: WO 2022/183329

(56) References cited:
- EP-A1- 3 647 735
- EP-A1- 3 683 782
- WO-A1-2019/231456
- CN-A- 107 433 946
- CN-A- 109 131 326
- CN-A- 110 588 653
- CN-A- 111 133 485
- CN-A- 111 538 328
- CN-A- 112 216 146

## Description

### TECHNICAL FIELD

This invention relates to the field of autonomous driving technologies, and in particular, to an intelligent driving method and apparatus.

### BACKGROUND

In an advanced driver assistant system (Advanced Driver Assistant System, ADAS), surrounding environment information of a vehicle is obtained through sensing and converging by a sensor of the vehicle, and then path planning, vehicle control, and the like are performed based on the environment information to assist a driver in driving.

Currently, a feature (also referred to as a function) of the ADAS may include one or more of the following: adaptive cruise control (Adaptive Cruise Control, ACC), lane keeping assistance (Lane Keep Assistance, LKA), traffic jam assistance (Traffic Jam Assistance, TJA), auto lane change (Auto Lane Change, ALC), semi-auto lane change (Semi-Auto Lane Change, SLC), collision avoid assistance (Collision Avoid Assistance, CAA), lane center control (Lane Center Control, LCC), object follow (Object Follow, OBF), and the like. In some ADAS system architectures, a control trajectory corresponding to each feature is generated based on a plurality of trajectory lines. To support different features, the environment information needs to be processed to generate a plurality of trajectory lines. This requires a high computing power of the ADAS system. In addition, a state machine is used to switch between the different features, and a switching condition and transition logic are complex. In addition, scalability of the system is low, and if a new feature is added, a trajectory line specific to the feature needs to be generated, and the state machine needs to be adjusted.

International patent application WO 2019/231456 A1 describes a method for world objects tracking and prediction by an autonomous vehicle, wherein hypotheses for a first world object are determined, and a hypothesis of the hypotheses is provided based on a respective hypothesis likelihood of each of the hypotheses.

### SUMMARY

This invention provides an intelligent driving method and apparatus.

The invention is set out in the appended set of claims.

According to a first aspect, as defined in independent claim 1, the invention provides an intelligent driving method, where the method includes: obtaining surrounding environment information of an ego vehicle at a current moment and status information of the ego vehicle at the current moment; determining a control point at the current moment based on the environment information and the status information; and generating a control trajectory at the current moment based on the control point, a control trajectory at a historical moment, and the status information, where the control trajectory represents a trajectory used to guide traveling of the ego vehicle.

Based on the foregoing technical solution, the control point at the current moment may be determined based on the surrounding environment information of the ego vehicle at the current moment and the status information of the ego vehicle at the current moment; and the control trajectory at the current moment is generated based on the control point, a control trajectory at a historical moment, and the status information of the ego vehicle at the current moment. In this way, impact of the environment information on features at a point (that is, the control point) in space, and the control trajectory at the current moment may be generated by using the control point, to meet control requirements in different scenarios. In addition, the environment information does not need to be processed in advance to generate a plurality of trajectory lines, thereby greatly reducing a requirement on a computing power, and improving performance of an ADAS system.

According to the first aspect, as further defined in claim 1, the determining a control point at the current moment based on the environment information and the status information includes: sequentially determining the control point at the current moment based on preset priority information of each first object in the environment information and the status information.

Based on the foregoing technical solution, the control point at the current moment is sequentially determined based on the preset priority information and the status information of each first object in the environment information. In this way, positions of control points in different scenarios are changed based on a plurality of information sources (that is, first objects in the environment information) and in a manner of sorting priorities of the information sources, and the control point at the current moment is determined, thereby implementing a plurality of features (for example, features such as OBF, LKA, TJA, and LCC). In addition, switching between different features are implemented based on the priorities of the plurality of information sources, thereby ensuring smooth transition between the plurality of features or scenarios. Further, switching between different features is implemented without a state machine, thereby reducing logic complexity.

According to the first aspect, as further defined in claim 1, the first object includes a lane line of an ego lane, a target vehicle, and a vehicle in an adjacent lane, where priorities of the lane line of the ego lane, the target vehicle, and the vehicle in the adjacent lane are in descending order; and the sequentially determining the control point at the current moment based on preset priority information of each first object in the environment information and the status information includes: when the lane line of the ego lane exists, using a position point that corresponds to a preset distance on the lane line of the ego lane and that meets a preset condition as the control point at the current moment, where the preset distance is determined based on the status information; if the lane line of the ego lane does not exist, when the target vehicle exists, using a position point that corresponds to the target vehicle and that meets the preset condition as the control point at the current moment; or if neither the lane line of the ego lane nor the target vehicle exists, when a vehicle exists in the adjacent lane, using a position point that is projected by the vehicle in the adjacent lane on the ego lane and that meets the preset condition as the control point at the current moment.

Based on the foregoing technical solution, the control point at the current moment may be determined based on the lane line of the ego lane of the ego vehicle in the surrounding environment information of the ego vehicle at the current moment, to implement features such as LCC and LKA; the control point at the current moment may be determined based on a CIPV in the surrounding environment information of the ego vehicle at the current moment, to implement features such as TJA and OBF; and the control point at the current moment may be determined based on the vehicle in the adjacent lane in the surrounding environment information of the ego vehicle at the current moment, so as to implement features such as TJA and LKA. In this way, positions of control points in different scenarios are changed based on the lane line of the ego lane, the target vehicle, and the vehicle in the adjacent lane and in a priority sorting manner, and the control point at the current moment is determined based on the first object that exists in the environment information and that has a highest priority, so as to implement a plurality of features (for example, features such as LCC, LKA, OBF, and TJA). In addition, switching between different features is implemented based on the lane line of the ego lane, the target vehicle, and the priority of the vehicle in the adjacent lane, thereby ensuring smooth transition between the plurality of features or scenarios.

According to a preferred embodiment, the sequentially determining the control point at the current moment based on preset priority information of each first object in the environment information and the status information includes: obtaining a position point corresponding to a first object with a highest priority; determining whether a second object exists in a preset area, where the second object is an avoidance object of the ego vehicle in the environment information; and performing offset processing on the position point corresponding to the first object when the second object exists, and using an offset position point as the control point at the current moment.

Based on the foregoing technical solution, when the second object exists in the preset area, it indicates that if a control trajectory is generated by using the obtained position point corresponding to the first object, and traveling of the ego vehicle is controlled according to the control trajectory, there is a risk of collision with the second object. In this case, offset processing is performed on the position point corresponding to the first object, and the offset position point is used as the control point at the current moment, so as to avoid collision with the second object. In this way, positions of control points in different scenarios are changed based on the first object and in a priority sorting manner, and the control point at the current moment is determined, thereby implementing a plurality of features (such as CAA and staying away from a road edge) and ensuring smooth transition between the plurality of features or scenarios.

According to a preferred embodiment, the second object includes a hard boundary of the ego lane, and the preset area is an area that is of a preset size and that is centered on the position point corresponding to the first object; and the performing offset processing on the position point corresponding to the first object when the second object exists, and using an offset position point as the control point at the current moment includes: when the hard boundary of the ego lane exists, performing offset processing on the position point corresponding to the first object, so that the hard boundary is outside an area that is of the preset size and that is centered on the offset position point, and the offset position point is in the ego lane; and using the offset position point as the control point at the current moment.

Based on the foregoing technical solution, when the hard boundary of the ego lane exists, offset processing is performed on the position point corresponding to the first object, so that the hard boundary is outside the area that is of the preset size and that is centered on the offset position point, the offset position point is in the ego lane, and the offset position point is used as the control point at the current moment, and the control point is far away from the hard boundary of the lane, so that the ego vehicle does not collide with the hard boundary when traveling according to the control trajectory generated based on the control point. In this way, positions of control points in different scenarios are changed based on the first object, in a priority sorting manner, and with reference to the hard boundary, and the control point at the current moment is determined, thereby implementing a plurality of features (for example, a feature such as staying away from a road edge) and ensuring smooth transition between the plurality of features or scenarios.

According to a preferred embodiment, the second object includes an obstacle; and the preset area is an area of a preset size in front of the ego vehicle in the ego lane; and the performing offset processing on the position point corresponding to the first object when the second object exists, and using an offset position point as the control point at the current moment includes: when the obstacle exists, performing, based on weight information corresponding to the obstacle, offset processing on the position point corresponding to the first object, so that the obstacle is outside an area that is of the preset size and that is centered on the offset position point, and the offset position point is in the ego lane, where the weight information indicates a degree of avoiding the obstacle by the ego vehicle; and using the offset position point as the control point at the current moment.

Based on the foregoing technical solution, considering that actions of avoiding an obstacle by the ego vehicle are different in different scenarios, weight information corresponding to the obstacle is used to indicate degrees of avoiding the obstacle by the ego vehicle in different scenarios, and offset processing is performed on the position point corresponding to the first object based on the weight information corresponding to the obstacle, so as to implement offsetting of position points in different scenarios. The offset position point is used as the control point at the current moment, and the control point is far away from the obstacle, so that the ego vehicle avoids collision with the obstacle when traveling according to the control trajectory generated based on the control point. In this way, positions of control points in different scenarios are changed based on the first object, in a priority sorting manner, and with reference to the obstacle and weight information corresponding to the obstacle, and the control point at the current moment is determined, thereby implementing a plurality of features (for example, a feature such as CAA) and ensuring smooth transition between the plurality of features or scenarios.

According to a preferred embodiment, a value of the weight information is determined based on at least one of a time of headway THW, a time to collision TTC, and an invade vehicle width IVW, where the value of the weight information is negatively correlated with the THW, negatively correlated with the TTC, and positively correlated with the IVW.

Based on the foregoing technical solution, the value of the weight information is negatively correlated with the THW, that is, a smaller THW indicates a more obvious obstacle avoidance action of the ego vehicle; the value of the weight information is negatively correlated with the TTC, that is, a smaller TTC indicates a more obvious obstacle avoidance action of the ego vehicle; and the value of the weight information is positively correlated with IVW, that is, a larger IVW indicates a more obvious obstacle avoidance action of the ego vehicle. In this way, positions of control points in different scenarios are changed based on the values of weight information corresponding to different scenarios, and the control point at the current moment is determined, thereby implementing smooth transition between different scenarios.

According to a preferred embodiment, in a seventh possible implementation of the first aspect, the generating a control trajectory at the current moment based on the control point, a control trajectory at a historical moment, and the status information includes: generating the control trajectory at the current moment based on the control point, the control trajectory at the historical moment, and the status information by using a Kalman filter.

Based on the foregoing technical solution, the Kalman filter has temporal continuity, inputs the position information of the control point at the current moment, the control trajectory at the historical moment, and the status information of the ego vehicle at the current moment to the Kalman filter, and generates the control trajectory at the current moment by using the spatial continuity of the control point in time domain, to meet control requirements in different scenarios. In addition, this greatly reduces a requirement for a computing power and improves system performance.

According to a second aspect, as defined in independent claim 7, this invention provides an intelligent driving apparatus, where the apparatus includes: an obtaining module, configured to obtain surrounding environment information of an ego vehicle at a current moment and status information of the ego vehicle at the current moment; a determining module, configured to determine control points at the current moment based on the environment information and the status information; and a generation module, configured to generate a control trajectory at the current moment based on the control points, a control trajectory at a historical moment, and the status information, where the control trajectory represents a trajectory used to guide traveling of the ego vehicle.

According to the second aspect, as further defined in claim 7, the determining module is further configured to sequentially determine the control point at the current moment based on preset priority information of each first object in the environment information and the status information.

According to the second aspect, as further defined in claim 7, the first object includes a lane line of an ego lane, a target vehicle, and a vehicle in an adjacent lane, where priorities of the lane line of the ego lane, the target vehicle, and the vehicle in the adjacent lane are in descending order; and the determining module is further configured to: when the lane line of the ego lane exists, use a position point that corresponds to a preset distance on the lane line of the ego lane and that meets a preset condition as the control point at the current moment, where the preset distance is determined based on the status information; if the lane line of the ego lane does not exist, when the target vehicle exists, use a position point that corresponds to the target vehicle and that meets the preset condition as the control point at the current moment; or if neither the lane line of the ego lane nor the target vehicle exists, when a vehicle exists in the adjacent lane, use a position point that is projected by the vehicle in the adjacent lane on the ego lane and that meets the preset condition as the control point at the current moment.

According to a preferred embodiment, the determining module is further configured to: obtain a position point corresponding to a first object with a highest priority; determine whether a second object exists in a preset area, where the second object is an avoidance object of the ego vehicle in the environment information; and perform offset processing on the position point corresponding to the first object when the second object exists, and use an offset position point as the control point at the current moment.

According to a preferred embodiment, the second object includes a hard boundary of an ego lane, and the preset area is an area that is of a preset size and that is centered on a position point corresponding to the first object; and the determining module is further configured to: when the hard boundary of the ego lane exists, perform offset processing on the position point corresponding to the first object, so that the hard boundary is outside an area that is of the preset size and that is centered on the offset position point, and the offset position point is in the ego lane; and use the offset position point as the control point at the current moment.

According to a preferred embodiment, the second object includes an obstacle; and the preset area is an area of a preset size in front of the ego vehicle in the ego lane; the determining module is further configured to: when the obstacle exists, perform, based on weight information corresponding to the obstacle, offset processing on the position point corresponding to the first object, so that the obstacle is outside an area that is of the preset size and that is centered on the offset position point, and the offset position point is in the ego lane, where the weight information indicates a degree of avoiding the obstacle by the ego vehicle; and use the offset position point as the control point at the current moment.

These aspects and other aspects of this invention are more concise and more comprehensive in descriptions of the following embodiments.

### BRIEF DESCRIPTION OF DRAWINGS

FIG. 1 is a schematic diagram of an application scenario to which an intelligent driving method is applicable according to an embodiment of this invention;
FIG. 2 is a flowchart of an intelligent driving method according to an embodiment of this invention;
FIG. 3 is a flowchart of determining a control point at a current moment according to an embodiment of this invention;
FIG. 4 is a schematic diagram of a plurality of vehicles invading into an ego lane according to an embodiment of this invention;
FIG. 5 is a schematic diagram of position point offset in a scenario in which a plurality of vehicles invade into an ego lane as shown in FIG. 4 according to an embodiment of this invention;
FIG. 6(a) to FIG. 6(d) each is a schematic diagram of a weight function according to an embodiment of this invention;
FIG. 7 is a schematic diagram of another weight function according to an embodiment of this invention;
FIG. 8 is a flowchart of determining a control point at a current moment according to an embodiment of this invention;
FIG. 9 is a schematic diagram of implementing an OBF feature by using a control point according to an embodiment of this invention;
FIG. 10 is a schematic diagram of implementing an LCC feature by using a control point according to an embodiment of this invention;
FIG. 11 is a schematic diagram of implementing a TJA feature by using a control point according to an embodiment of this invention;
FIG. 12 is a schematic diagram of implementing an ALC/SLC feature by using a control point according to an embodiment of this invention;
FIG. 13 is a comparison diagram of intelligent driving according to an embodiment of this invention;
FIG. 14 is a schematic diagram of a transverse offset velocity curve according to an embodiment of this invention;
FIG. 15 is a schematic diagram of a structure of an intelligent driving apparatus according to an embodiment of this invention;
FIG. 16 is a diagram of an architecture of an ADAS system according to an embodiment of this invention; and
FIG. 17 is a schematic diagram of a structure of another intelligent driving apparatus according to an embodiment of this invention.

### DESCRIPTION OF EMBODIMENTS

The following describes various example embodiments, features, and aspects of this invention in detail with reference to the accompanying drawings. Identical reference signs in the accompanying drawings indicate elements that have same or similar functions. Although various aspects of embodiments are shown in the accompanying drawings, unless otherwise specified, the accompanying drawings do not need to be drawn to scale.

The specific term "example" herein means "used as an example, embodiment or illustration". Any embodiment described as an "example" is not necessarily explained as being superior or better than other embodiments.

This invention provides an intelligent driving method. The method may be performed by using an intelligent driving apparatus. The intelligent driving apparatus may be independently disposed, or may be integrated into another apparatus, or may be implemented by using software or a combination of software and hardware.

For example, the intelligent driving apparatus may be applied to an ADAS or an automated driving system (Automated Driving System, ADS), and may be further applied to scenarios such as Device to Device Communication (Device to Device Communication, D2D), vehicle to everything (vehicle to everything, V2X) communication, vehicle to vehicle (Vehicle to Vehicle, V2V) communication, long term evolution-vehicle (long term evolution-vehicle, LTE-V) communication, and long term evolution-machine (long term evolution-machine, LTE-M) communication.

For example, the intelligent driving apparatus may be a vehicle having a control trajectory generation function, or may be another component having a control trajectory generation function. The intelligent driving apparatus includes but is not limited to a sensor such as an in-vehicle terminal, an in-vehicle controller, an in-vehicle module, an in-vehicle module, an in-vehicle component, an in-vehicle chip, an in-vehicle unit, an in-vehicle radar, or an in-vehicle camera. The vehicle may implement the intelligent driving method provided in this invention by using the in-vehicle terminal, the in-vehicle controller, the in-vehicle module, the in-vehicle module, the in-vehicle component, in-vehicle chip, the in-vehicle unit, the in-vehicle radar or camera.

For example, the intelligent driving apparatus may alternatively be another intelligent terminal having a control trajectory generation function other than a vehicle, or may be disposed in another intelligent terminal having a control trajectory generation function other than a vehicle, or may be disposed in a component of the intelligent terminal. The intelligent terminal may be another terminal device such as an intelligent transportation device, a smart household device, a robot, or an unmanned aerial vehicle. The intelligent driving apparatus includes but is not limited to an intelligent terminal or a sensor such as a controller, a chip, a radar, or a camera in the intelligent terminal, another component, or the like.

For example, the intelligent driving apparatus may be a general-purpose device or a special-purpose device. During specific implementation, the intelligent driving apparatus may alternatively be a desktop computer, a portable computer, a network server, a cloud server, a personal digital assistant (personal digital assistant, PDA), a mobile phone, a tablet computer, a wireless terminal device, an embedded device, or another device having a processing function.

For example, the intelligent driving apparatus may alternatively be a chip or a processor having a processing function, and the intelligent driving apparatus may include a plurality of processors. The processor may be a single-core processor (single-CPU), or may be a multi-core processor (multi-CPU). The chip or the processor having a processing function may be disposed in a sensor, or may not be disposed in a sensor, but may be disposed at a receive end of an output signal of the sensor.

For ease of description, in the embodiments of this invention, an example in which the intelligent driving apparatus is applied to the ADAS system is used to describe a provided intelligent driving method.

The following describes in detail the intelligent driving method according to an embodiment of this invention.

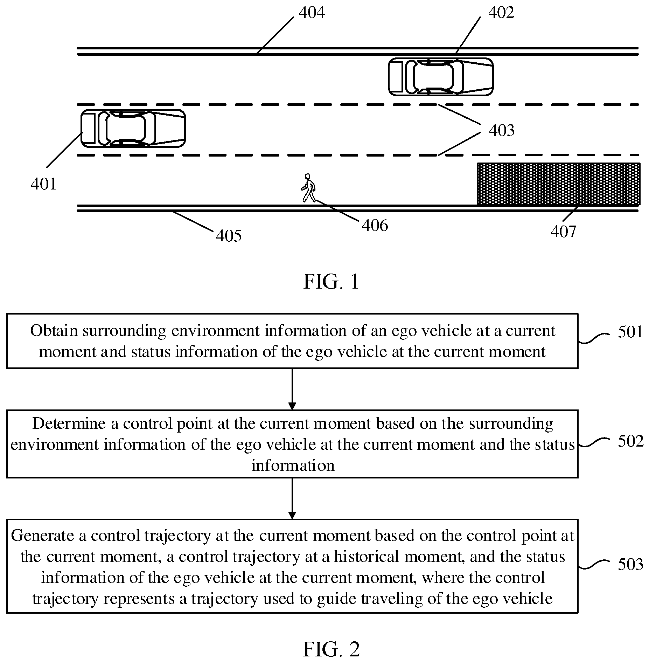

FIG. 1 is a schematic diagram of an application scenario to which an intelligent driving method is applicable according to an embodiment of this invention. As shown in FIG. 1, the application scenario may be an advanced assisted driving scenario. The scenario includes: an ego vehicle 401, where at least one sensor (not shown in the figure) is installed on the ego vehicle 401, and the ego vehicle 401 further includes an intelligent driving apparatus (not shown in the figure). The sensor is configured to sense surrounding environment information of the ego vehicle 401, for example, a lane line 403 of an ego lane (that is, a lane in which the ego vehicle is located), a lane line 404 of an adjacent lane (that is, a lane adjacent to the ego lane), a road edge boundary 405 of a load, a pedestrian 406, a construction area 407, and another vehicle (for example, a front vehicle 402, a side vehicle (not shown in the figure), or a rear vehicle (not shown in the figure)). The sensor transmits the sensed environment information to an intelligent driving apparatus. The intelligent driving apparatus is configured to perform the intelligent driving method in this embodiment of this invention.

It should be noted that FIG. 1 shows only one ego vehicle, one vehicle different from the ego vehicle, three lanes, one pedestrian, and one construction area. It should be understood that the application scenario may include more or fewer vehicles, lanes, obstacles, and the like, which are not shown herein.

In addition, the application scenarios described in the embodiments of this invention are intended to describe the technical solutions in the embodiments of this invention more clearly. A person skilled in the art may learn that, for emergence of another similar or new application scenario, the technical solutions provided in the embodiments of this invention are also applicable to similar technical problems.

FIG. 2 is a flowchart of an intelligent driving method according to an embodiment of this invention. As shown in FIG. 2, the method may be applied to the intelligent driving apparatus in the ego vehicle 401 in FIG. 1, and the method may include the following steps.

Step 501: An intelligent driving apparatus obtains surrounding environment information of an ego vehicle at a current moment and status information of the ego vehicle at the current moment.

The environment information indicates one or more objects in the surrounding environment of the ego vehicle and attribute information of each object, for example, a lane line of an ego lane, a road edge boundary of a road, a lane line of an adjacent lane, a target vehicle, traffic in a forward direction, a side vehicle, a rear vehicle, a vehicle in an adjacent lane, a pedestrian, a traffic light, a building, a tree, a construction area, and attribute information of each object such as a position, a velocity, an acceleration, an orientation, and a distance. For example, the surrounding environment information of the ego vehicle may be sensed by using a sensor such as a radar (for example, a millimeter-wave radar, a laser radar, or an ultrasonic radar) or an image capturing apparatus (for example, a camera) installed around the ego vehicle.

The status information of the ego vehicle may include driving status information, motion status information, and the like. The motion status information indicates information about a kinematic status of the ego vehicle, for example, information such as a velocity, an acceleration, a yaw angular velocity, a steering angle, a steering radius, a vehicle position, and a posture of the ego vehicle. For example, the running status information may be obtained in real time by using a sensor installed on the ego vehicle. The driving status information indicates parameter information set by a driver, for example, a cruise velocity, a distance to target, a time of headway, a lane change instruction of the driver, and lane change duration that are set by the driver. For example, the driving status information that is input by the driver by using a display, a physical button on a steering wheel, a voice, or the like may be received.

It should be noted that the velocity, the acceleration, the distance, and the like of each object in the foregoing surrounding environment may be a relative velocity, a relative acceleration, and a relative distance of each object relative to the ego vehicle, and the position, the orientation, and the like of each object may be a position or an orientation in a vehicle coordinate system. The vehicle coordinate system is used to describe a relative position relationship between an object around the ego vehicle and the ego vehicle. A conversion relationship between a coordinate system of each sensor and the vehicle coordinate system may be determined through pre-calibration, so that coordinates of each object in the vehicle coordinate system are determined based on the data collected by the sensor. In this embodiment of this invention, unless otherwise specified, a position of each object and the like are coordinates in the vehicle coordinate system. For example, a center of a rear (wheel) axis of an ego vehicle that is projected on the ground is used as a three-dimensional origin, a forward direction of the vehicle is a forward direction of the X axis, a leftward direction of the rear axis is a forward direction of the Y axis, and an upward direction is a forward direction of the Z axis. That is, a corresponding vehicle coordinate system XYZ is formed.

Step 502: The intelligent driving apparatus determines a control point at the current moment based on the surrounding environment information of the ego vehicle and the status information of the ego vehicle at the current moment.

The control point, also referred to as a virtual point, may be a point on an object in a surrounding environment of the ego vehicle, for example, may be a midpoint of a rear bumper of the target vehicle, or may be a point that is on the lane line of the ego lane and that is at a specific distance from the ego vehicle. Alternatively, the control point may be a point outside the foregoing object in the surrounding environment of the ego vehicle, for example, may be a point between the left and right lane lines of the ego lane, or may be a point at a specific distance in front of the ego vehicle.

The following describes an example of an implementation of determining the control point at the current moment in this step. Manner 1: A unique control point at the current moment may be determined based on the first object and the status information (for example, driving status information) of the ego vehicle that are included in the surrounding environment information of the ego vehicle at the current moment.

In a possible implementation, the control point at the current moment may be sequentially determined based on preset priority information of each first object in the environment information and the driving status information at the current moment. In an example, a first object that exists in the environment information and that has a highest priority may be determined based on preset priority information of each first object, and the control point at the current moment is determined based on the first object with the highest priority. For example, it may be sequentially determined, based on the preset priority information of each first object, whether each first object exists in the surrounding environment information of the ego vehicle at the current moment; and when it is determined that a first object exists in the surrounding environment information of the ego vehicle at the current moment, the control point at the current moment is determined based on the existing first object.

The first object may include a reference object for traveling of the ego vehicle, for example, may be a lane line of an ego lane, a target vehicle, or a vehicle in an adjacent lane. Different first objects correspond to different features, and the features corresponding to the first objects may be features such as OBF, LKA, TJA, and LCC. That is, preset priorities may also represent priorities that are used to process the features and that are preset in the ADAS system. For example, the preset priorities of the lane line of the ego lane, the target object, and the lane line of the adjacent lane are in descending order. In this way, the control point at the current moment is sequentially determined based on the preset priority information and the driving status information of each first object in the environment information. In this way, positions of control points in different scenarios are changed based on a plurality of information sources (that is, first objects in the environment information) and in a manner of sorting priorities of the information sources, and the control point at the current moment is determined, thereby implementing a plurality of features (for example, features such as OBF, LKA, TJA, and LCC). In addition, switching between different features are implemented based on the priorities of the plurality of information sources, thereby ensuring smooth transition between the plurality of features or scenarios. Switching between different features is implemented without a state machine, thereby reducing logic complexity.

It should be noted that, in different ADAS solutions, one or more features may be included, and different features correspond to different first objects. A quantity of features, a type of the first object, and a preset priority of each type may be preconfigured by the ADAS system, or may be set by a driver.

For example, the first object may include a lane line of an ego lane, a closest in-path vehicle (closest in-path vehicle, CIPV) (that is, a target vehicle) in a lane in which the ego vehicle is located, and a vehicle in an adjacent lane. Priorities of the lane line of the ego lane, the CIPV, and the vehicle in the adjacent lane are in descending order. If the lane line of the ego lane exists, a position point that corresponds to a preset distance on the lane line of the ego lane and that meets a preset condition is used as the control point at the current moment; or if the lane line of the ego lane does not exist but the CIPV exists, a position point that corresponds to the CIPV and that meets the preset condition is used as the control point at the current moment; or if neither the lane line of the ego lane nor the CIPV exists, when a vehicle exists in the adjacent lane, a position point that is projected by the vehicle in the adjacent lane on the ego lane and that meets the preset condition is used as the control point at the current moment.

Existence of the lane line of the ego lane, existence of the CIPV, existence of the vehicle in the adjacent lane, or the like indicates that the sensor of the ego vehicle can sense data of the lane line of the ego lane, the CIPV, the vehicle in the adjacent lane, and the like. In addition, the data meets preset requirements for data stability and accuracy. The preset condition may include: The position point is within a range that can be reached by the ego vehicle in a current driving status. For example, the ego vehicle is currently moving forward, and the preset condition is that an X-axis coordinate value of the position point is greater than 3 m. That is, if the position point is located in front of the ego vehicle and the X-axis coordinate value is greater than 3 m, the preset condition is met; or if the position point is located behind or on a side of the ego vehicle, the preset condition is not met. The preset distance may be determined based on the driving status information. For example, if the distance to target that is set by the driver is 15 m to 40 m, the preset distance may include: an X-axis coordinate value of a position point is 15 m to 40 m, that is, a position point that is on a lane line of the ego lane and that has a longitudinal distance of 15 m to 40 m away from the vehicle is obtained. The position point corresponding to the preset distance on the lane line of the ego lane may be a point on the lane line of the ego lane at a preset distance, may be a point that is projected by a point on the lane line of the ego lane at a preset distance on the lane center line of the ego lane, or the like. The position point corresponding to the CIPV may be a midpoint of the rear bumper of the CIPV, or may be a point that is projected by the CIPV on the lane center line of the ego lane. A position point that is projected by a vehicle in the adjacent lane on the ego lane may be a point that is transversely projected by the midpoint of a rear bumper of the vehicle in the adjacent lane on the ego lane, for example, a corresponding projection point that is obtained after the midpoint of the rear bumper of the vehicle in the adjacent lane on the left of the ego lane is moved rightward in a transverse direction by a specific distance (for example, a width of a lane), where the transverse direction is a direction perpendicular to a driving direction indicated by a lane line, and correspondingly, the longitudinal direction is the driving direction indicated by the lane line.

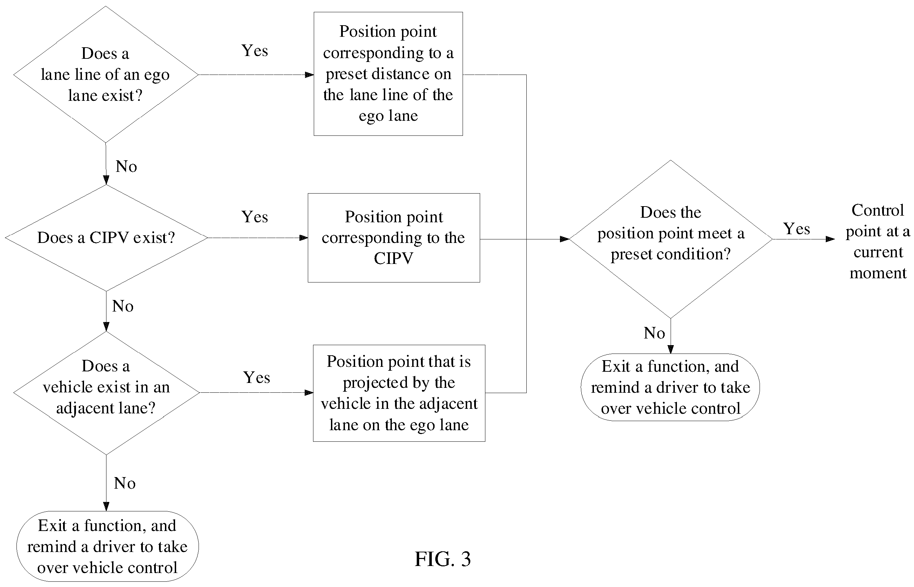

For example, FIG. 3 is a flowchart of determining a control point at a current moment according to an embodiment of this invention. As shown in FIG. 3, an intelligent driving apparatus first determines whether a lane line of an ego lane exists in environment information; obtains a position point corresponding to a preset distance on the lane line of the ego lane when the lane line of the ego lane exists; and if the position point meets a preset condition, uses the position point as the control point at the current moment; or if the position point does not meet the preset condition, exits the ADAS system, and reminds the driver to take over the vehicle control; or if the lane line of the ego lane does not exist, further determines whether the CIPV exists in the environment information. When the CIPV exists, the intelligent driving apparatus obtains a position point corresponding to the CIPV; and if the position point meets the preset condition, uses the position point as the control point at the current moment; or if the position point does not meet the preset condition, exits the ADAS system, and reminds the driver to take over vehicle control; or if the CIPV does not exist, determines whether a vehicle exists in the adjacent lane. When a vehicle exists in the adjacent lane, the intelligent driving apparatus obtains a position point that is projected by the vehicle in the adjacent lane on the ego lane; and if the position point meets the preset condition, uses the position point as the control point at the current moment; or if the position point does not meet the preset condition, exits the ADAS system, and reminds the driver to take over vehicle control. If no vehicle exists in the adjacent lane, the intelligent driving apparatus exits the ADAS system, and reminds the driver to take over vehicle control.

When the lane line of the ego lane exists and the control point at the current moment is determined, the control trajectory is generated, and features such as LCC and LKA can be implemented. When the CIPV exists and the control point at the current moment is determined, the control trajectory is generated, and features such as TJA and OBF can be implemented. When a vehicle exists in the adjacent lane and the control point at the current moment is determined, the control trajectory is generated, and features such as TJA and LKA can be implemented. In this way, positions of control points in different scenarios are changed based on the lane line of the ego lane, the target vehicle, and the vehicle in the adjacent lane and in a priority sorting manner, and the control point at the current moment may be determined based on the first object that exists in the environment information and has a highest priority, so as to implement a plurality of features. For example, the control point at the current moment may be determined based on the lane line of the ego lane in the surrounding environment information of the ego vehicle at the current moment, so as to implement features such as LCC and LKA. The control point at the current moment may be determined based on the CIPV in the surrounding environment information of the ego vehicle at the current moment, so as to implement features such as TJA and OBF. The control point at the current moment may be determined based on the vehicle in the lane adjacent to the ego vehicle in the surrounding environment information of the ego vehicle at the current moment, so as to implement features such as TJA and LKA. In addition, switching between different features is implemented based on the priorities of the lane line of the ego lane, the target vehicle, and the vehicle in the adjacent lane, thereby ensuring smooth transition between a plurality of features or scenarios.

Manner 2: The unique control point at the current moment may be determined based on the first object, the second object, and status information (for example, driving status information) of the ego vehicle that are included in the surrounding environment information of the ego vehicle at the current moment.

In a possible implementation, the sequentially determining a control point at the current moment based on preset priority information of each first object in the environment information and the driving status information at the current moment may include: obtaining a position point corresponding to a first object with a highest priority; determining whether a second object exists in a preset area; and when the second object exists, performing offset processing on the position point corresponding to the first object, and using the offset position point as the control point at the current moment.

The position point corresponding to the first object may be a position point corresponding to a preset distance on the lane line of the ego lane, a position point corresponding to a CIPV, a position point that is projected by a vehicle in an adjacent lane on the ego lane, or the like. The second object is an avoidance object of the ego vehicle in the environment information, for example, may be a side vehicle, a rear vehicle, a pedestrian, a construction area, or a road edge boundary of a road. Different second objects correspond to different features, and the feature corresponding to each second object may be a feature such as CAA or staying away from a road edge. The preset area is an area of a specific size on a road, for example, may be a circular area that is of a specific size and that is centered on a position point corresponding to the first object, or may be a rectangular area of a specific size in an ego lane. When the second object exists in the preset area, it indicates that if a control trajectory is generated by using the obtained position point corresponding to the first object, and traveling of the ego vehicle is controlled according to the control trajectory, there is a risk of collision with the second object. In this case, offset processing, for example, transverse offset processing and longitudinal offset processing, is performed on the position point corresponding to the first object, and the offset position point is used as the control point at the current moment, so as to avoid collision with the second object. In this way, positions of control points in different scenarios are changed based on the first object and in a priority sorting manner and with reference to the existing second object, and the control point at the current moment is determined, thereby implementing a plurality of features (such as CAA and staying away from a road edge) and ensuring smooth transition between the plurality of features or scenarios.

It should be noted that, in different ADAS solutions, one or more features may be included, and different features correspond to different second objects. A quantity of features, a type of the second object, and a size of the preset area may be preconfigured by the ADAS system, or may be set by a driver.

For example, the second object includes a hard boundary of a lane, and the preset area is a first area that is of a preset size and that is centered on a position point corresponding to the first object.

In a possible implementation, the performing offset processing on the position point corresponding to the first object when the second object exists, and using an offset position point as the control point at the current moment includes: when a hard boundary of a lane exists in the first area, performing offset processing on the position point corresponding to the first object, so that the hard boundary is outside an area that is of a preset size and that is centered on the offset position point, and the offset position point is in the ego lane; and using the offset position point as the control point at the current moment.

The hard boundary may be a boundary that cannot be touched or crossed by an ego vehicle, for example, may include a solid lane line of an ego lane, a road edge boundary of a road, and the like. The first area may be an area that is of a specific size and that is centered on the position point corresponding to the first object, for example, may be a circular area that is centered on the position point corresponding to the first object and that has a radius of 0.5 m to 1.875 m. The offset processing may be transversely moving the position point corresponding to the first object by a specific distance based on a position of a lane center line of the ego lane, for example, if the lane center line of the ego lane is located on the left side of the position point corresponding to the first object, transversely moving the position point corresponding to the first object by a specific distance to the left, so that the hard boundary is outside an area that is of a specific size and that is centered on the offset position point, and the offset position point is in the ego lane; and the offset position point is used as the control point at the current moment, and the control point is far away from the hard boundary of the lane, so that the ego vehicle does not collide with the hard boundary when traveling according to the control trajectory generated based on the control point. In this way, positions of control points in different scenarios are changed based on the first object, in a priority sorting manner, and with reference to the hard boundary, and the control point at the current moment is determined, thereby implementing a plurality of features (for example, a feature such as staying away from a road edge) and ensuring smooth transition between the plurality of features or scenarios.

For example, the second object may include an obstacle such as a side vehicle or a pedestrian, and the preset area may be a second area of a preset size in front of the ego vehicle in the ego lane.

In a possible implementation, the performing offset processing on the position point corresponding to the first object when the second object exists, and using an offset position point as the control point at the current moment includes: when an obstacle exists in the second area, performing, based on weight information corresponding to the obstacle, offset processing on the position point corresponding to the first object, so that the obstacle is outside an area that is of a preset size and that is centered on the offset position point, and the offset position point is in the ego lane; and using the offset position point as the control point at the current moment.

The second area may be a rectangular area that is in front of the ego vehicle in the ego lane and that has a specific longitudinal length (for example, 10 m to 40 m) and a specific transverse width (for example, 1.875 m to 3.75 m). The weight information corresponding to the obstacle indicates a degree of avoiding the obstacle by the ego vehicle. For example, a larger value of the weight information indicates a more obvious action of avoiding the obstacle by the ego vehicle, and a longer distance between a corresponding offset position point and the position point corresponding to the first object; and a smaller value of the weight information indicates a smaller action of avoiding the obstacle by the ego vehicle, and a shorter distance between the corresponding offset position point and the position point corresponding to the first object. In this way, considering that in different scenarios, information such as a longitudinal distance, a transverse distance, and a relative velocity of the obstacle is different, and actions of avoiding the obstacle by the ego vehicle are different, weight information corresponding to the obstacle is used to indicate degrees of avoiding the obstacle by the ego vehicle in different scenarios, and offset processing is performed on the position point corresponding to the first object based on the weight information corresponding to the obstacle, so as to implement offsetting of position points in different scenarios. The offset position point is used as the control point at the current moment, and the control point is far away from the obstacle, so that the ego vehicle avoids collision with the obstacle when traveling according to the control trajectory generated based on the control point. In this way, positions of control points in different scenarios are changed based on the first object, in a priority sorting manner, and with reference to the obstacle and weight information corresponding to the obstacle, and the control point at the current moment is determined, thereby implementing a plurality of features (for example, a feature such as CAA) and ensuring smooth transition between the plurality of features or scenarios.

For example, a value of the weight information may be determined by a preset weight function (or a weight function), and parameters included in the weight function may include a time of headway (Time of Headway, THW), a time to collision (Time to Collision, TTC), an invade vehicle width (Invade Vehicle Width, IVW), and the like. The THW may be determined based on driving status information, that is, may be preset by a driver. The TTC may be determined based on a relative distance and a relative velocity between the invading vehicle and the ego vehicle in the environment information. The IVW may be determined based on a position of a lane line of an ego lane in the environment information and a position of the invading vehicle. For example, parameters included in the weight function are the THW, the TTC, and the IVW. A value of the weight information may be represented as α = f(THW, TTC, IVW), where α is a value of the weight information, and f represents a weight function. The value α of the weight information is negatively correlated with the THW, that is, a smaller THW indicates a more obvious obstacle avoidance action of the ego vehicle; the value α of the weight information is negatively correlated with the TTC, that is, a smaller TTC indicates a more obvious obstacle avoidance action of the ego vehicle; and the value α of the weight information is positively correlated with IVW, that is, a larger IVW indicates a more obvious obstacle avoidance action of the ego vehicle. In this way, positions of control points in different scenarios are changed based on the values of weight information corresponding to different scenarios, and the control point at the current moment is determined, thereby implementing smooth transition between different scenarios.

The following describes weight information corresponding to an obstacle in different scenarios by using an example in which the obstacle is an invading vehicle.

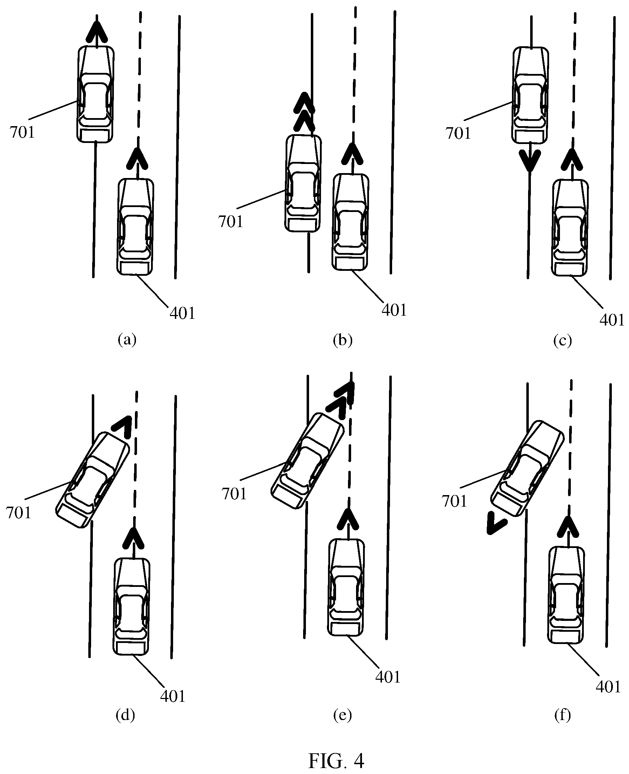

FIG. 4 is a schematic diagram showing a plurality of scenarios in which a vehicle invades into an ego lane according to an embodiment of this invention. In FIG. 4(a) to FIG. 4(f), a direction of an arrow indicates a velocity direction of a vehicle; arrows in front of an ego vehicle 401 and the invading vehicle 701 indicate a forward direction; and an arrow on the rear of the invading vehicle 701 indicates a reverse direction. A quantity of arrows indicates a velocity of the ego vehicle, and a larger quantity of the arrows indicates a higher velocity of the vehicle. FIG. 4(a) shows a scenario in which an invading vehicle is kept at a short distance, that is, the velocity directions of the invading vehicle 701 and the ego vehicle 401 are the forward direction, and the velocities of the invading vehicle 701 and the ego vehicle 401 are approximately equal. FIG. 4(b) shows a scenario in which an invading vehicle runs at a high velocity, that is, the velocity directions of the invading vehicle 701 and the ego vehicle 401 are the forward direction, and the velocity of the invading vehicle 701 is higher than the velocity of the ego vehicle 401. FIG. 4(c) shows a scenario in which an invading vehicle approaches at a low velocity, that is, the velocity direction of the invading vehicle 701 is the reverse direction, the velocity direction of the ego vehicle 401 is the forward direction, and the velocity of the invading vehicle 701 is lower than the velocity of the ego vehicle 401. FIG. 4(d) shows a scenario in which the invading vehicle cuts in at an equal velocity, that is, the velocity directions of the invading vehicle 701 and the ego vehicle 401 are the forward direction and form a specific included angle, and the velocity of the invading vehicle 701 is equal to the velocity of the ego vehicle 401. FIG. 4(e) shows a scenario in which the invading vehicle cuts in at a high velocity, that is, the velocity directions of the invading vehicle 701 and the ego vehicle 401 are the forward direction and form a specific included angle, and the velocity of the invading vehicle 701 is higher than the velocity of the ego vehicle 401. FIG. 4(f) shows a scenario in which the invading vehicle cuts in at a low velocity, that is, the velocity direction of the invading vehicle 701 is the reverse direction, the velocity direction of the ego vehicle 401 is the forward direction, the velocity direction of the invading vehicle 701 and the velocity direction of the ego vehicle 401 and form a specific included angle, and the velocity of the invading vehicle 701 is lower than the velocity of the ego vehicle 401.

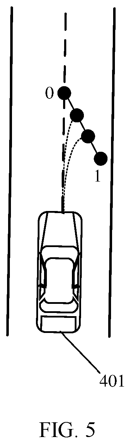

FIG. 5 is a schematic diagram of position point offsetting in a plurality of scenarios in which a vehicle invades into an ego lane that are shown in FIG. 4 according to an embodiment of this invention. As shown in FIG. 5, a point "0" represents a point of a preset distance on a lane center line of an ego lane, and a point "1" represents a transverse projection point of a rear bumper of the invading vehicle on a lane line away from an ego lane of the invading vehicle. Assuming that "0" is a position point corresponding to the first object, the offset position point is a point on a line segment whose endpoints are points "0" and "1 ". If the point "0" is used as the offset position point, that is, the point "0" is used as a control point to generate a control trajectory used to guide traveling of the ego vehicle, the ego vehicle does not perform an avoidance action. If the point "1" is used as the offset position point, that is, the point "1" is used as a control point to generate a control trajectory used to guide traveling of the ego vehicle, the ego vehicle performs an obvious avoidance action. If a point on a line segment whose endpoints are the point "0" and the point "1" is used as the offset position point, the ego vehicle generates an avoidance action, and an avoidance degree (or an amplitude of the avoidance action) is negatively correlated with a distance between the offset position point and the point 1, that is, a shorter distance between the offset position point and the point "1" indicates a greater amplitude of the avoidance action. For the different lane invading scenarios shown in FIG. 4(a) to FIG. 4(f), if the point "0" in FIG. 5 is used as the offset position point, the ego vehicle does not perform an avoidance action, and a scenario in which the invading vehicle runs at a high velocity in FIG. 4(b) is applicable; or if the point "1" is used as the offset position point, the ego vehicle performs an obvious avoidance action, and a scenario in which the invading vehicle cuts in at a low velocity in FIG. 4(f) is applicable. If a point between the point "0" and the point "1" is used as the offset position point, a shorter distance between the point and the point "0" indicates that the ego vehicle will perform a less obvious vehicle avoidance action, and a scenario in which an invading vehicle is kept at a short distance in FIG. 4(a) and a scenario in which an invading vehicle is approaching at a low velocity in FIG. 4(c) are applicable; and a shorter distance between the point and the point "1" indicates that the ego vehicle will perform a more obvious vehicle avoidance action, and a scenario in which an invading vehicle cuts in at an equal velocity in FIG. 4(d) and a scenario in which an invading vehicle cuts in at a high velocity in FIG. 4(e) are applicable.

In different scenarios, the value of the weight information corresponding to the invading vehicle may be determined based on a position, a relative distance, a relative velocity, and the like of the invading vehicle in the environment information and the foregoing weight function f, that is, α = f(THW, TTC, IVW). Different values of the weight information correspond to different points on a connection line between "0" and "1". For example, when the value of the weight information is between 0 and 1, a line segment between "0" and "1" is equally divided by proportion; or when the value of the weight information is equal to 1, the corresponding point "1" is the offset position point; or when the value of the weight information is equal to 0, the corresponding point "0" is the offset position point; or when the value of the weight information is greater than 0 and less than 1, a point at a corresponding position on the line segment is selected. In this way, in different scenarios, the offset position point may be determined based on the THW, the TTC, the IVW, and the weight function f. If the offset position point is used as the control point at the current moment to generate a control trajectory at the current moment, it can be ensured that the ego vehicle does not collide with the invading vehicle when traveling along the control trajectory.

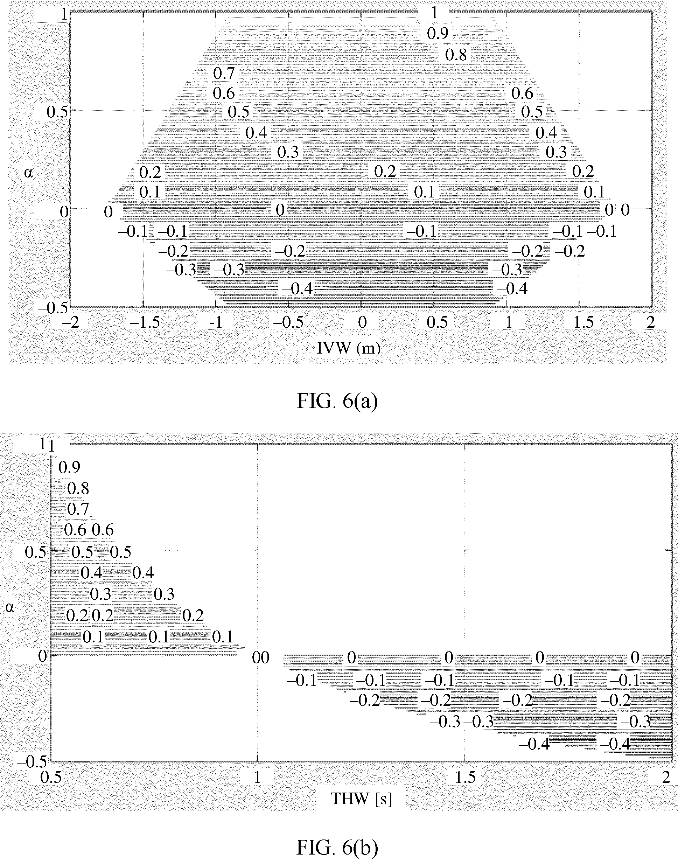

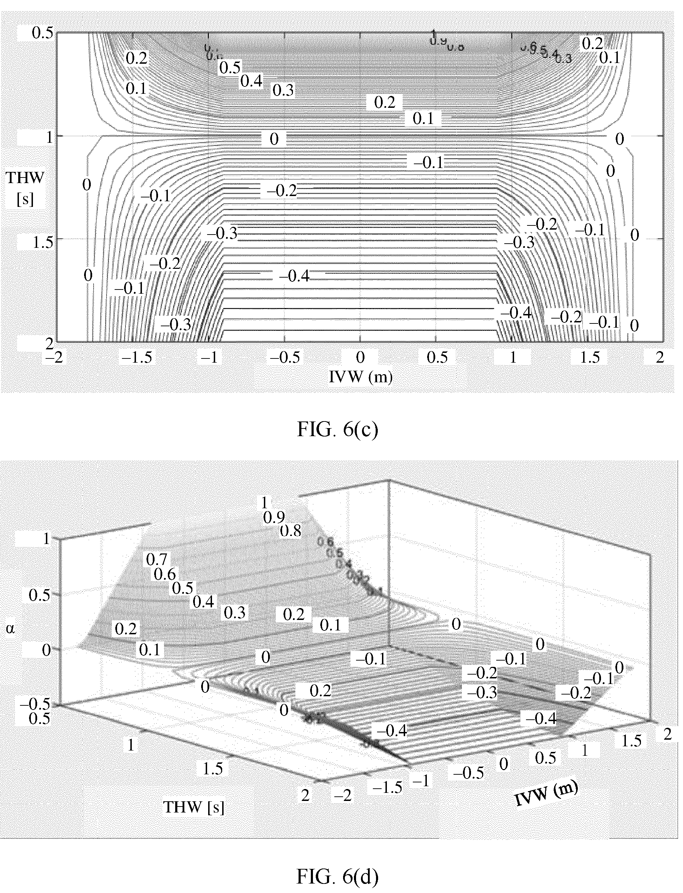

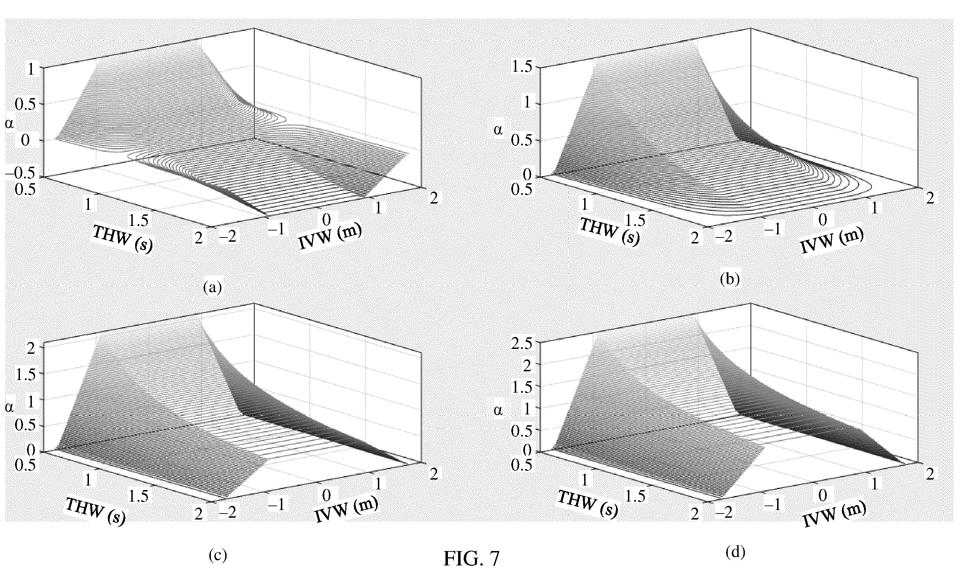

For example, in FIG. 4, in different scenarios, when the invading vehicle 701 and the ego vehicle 401 have same relative positions and different relative velocities, TTCs are different, and in this case, corresponding weight functions have different shapes. FIG. 6(a) to FIG. 6(d) each is a schematic diagram of a weight function according to an embodiment of this invention. FIG. 6(a) to FIG. 6(d) each show a weight function that is specific to a value α in weight information and that is for the THW and the IVW when a TTC is -4, where FIG. 6(a) to FIG. 6(c) are three views of FIG. 6(d). As the TTC changes, the shape of the weight function also changes and corresponds to obstacle avoidance cases in different scenarios. FIG. 7 is a schematic diagram of another weight function according to an embodiment of this invention. FIG. 7(a) to FIG. 7(d) show corresponding weight function change trends at different TTCs. FIG. 7(a) shows a weight function that is specific to α and that is for the THW and the IVW when the TTC is less than 0; FIG. 7(b) shows a weight function that is specific to α and that is for the THW and the IVW when TTC is infinitely large; FIG. 7(c) shows a weight function that is specific to α and that is for the THW and the IVW when the TTC is 20; and FIG. 7(d) shows a weight function that is specific to α and that is for the THW and the IVW when TTC is 4.

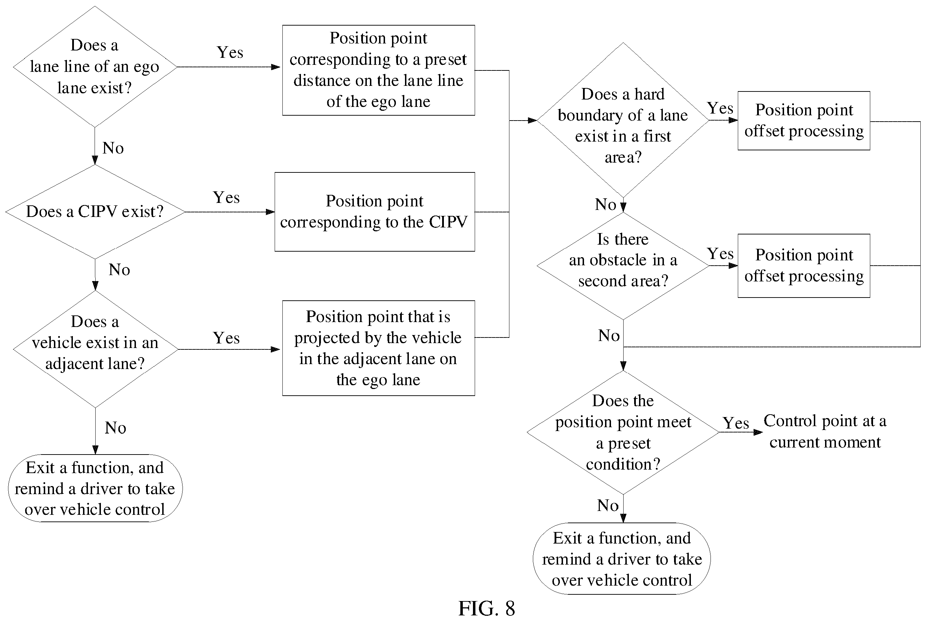

FIG. 8 is a flowchart of determining a control point at a current moment according to an embodiment of this invention. As shown in FIG. 8, the intelligent driving apparatus first determines whether a lane line of an ego lane exists in environment information. If the lane line of the ego lane exists, the intelligent driving apparatus obtains a position point corresponding to a preset distance on the lane line of the ego lane; or if the lane line of the ego lane does not exist, the intelligent driving apparatus further determines whether a CIPV exists in the environment information. If the CIPV exists, the intelligent driving apparatus obtains a position point corresponding to the CIPV; or if the CIPV does not exist, the intelligent driving apparatus further determines whether a vehicle exists in the adjacent lane. If a vehicle exists in the adjacent lane, the intelligent driving apparatus obtains a position point that is projected by the vehicle in the adjacent lane on the ego lane; or if a vehicle does not exist in the adjacent lane, the intelligent driving apparatus exits the ADAS system, and reminds the driver to take over vehicle control.

Further, after any one of the position point corresponding to the preset distance on the lane line of the ego lane, the position point corresponding to the CIPV, and the position point that is projected by the vehicle in the adjacent lane on the ego lane is obtained, the intelligent driving apparatus determines whether a hard boundary of the lane exists in the first area and whether an obstacle exists in the second area. There is no execution sequence between the step of determining whether the hard boundary of the lane exists in the first area and the step of determining whether the obstacle exists in the second area. When a hard boundary of a lane exists in the first area or an obstacle exists in the second area, the intelligent driving apparatus performs corresponding position point offset processing to obtain an offset position point. If the offset position point meets a preset condition, the offset position point is used as a control point at a current moment; or if the offset position point does not meet the preset condition, the intelligent driving apparatus exits the ADAS system, and reminds the driver to take over vehicle control. When there is no hard boundary of the lane in the first area and there is no obstacle in the second area, the intelligent driving apparatus determines whether the position point meets the preset condition. If the position point meets the preset condition, the intelligent driving apparatus uses the position point as the control point at the current moment; or if the position point does not meet the preset condition, the intelligent driving apparatus exits the ADAS system, and reminds the driver to take over vehicle control.

When the lane line of the ego lane exists and position point offset processing does not need to be performed, the control trajectory may be generated based on the determined control point, and features such as LCC and LKA may be implemented. When the CIPV exists and position point offset processing does not need to be performed, the control trajectory may be generated based on the determined control point, and features such as TJA and OBF may be implemented. When the vehicle exists in the adjacent lane and position point offset processing does not need to be performed, the control trajectory may be generated based on the determined control point, features such as TJA and LKA may be implemented. When any one of a lane line, a CIPV, and an adjacent lane of the ego lane exists, and a hard boundary of the lane exists in the first area, a control trajectory may be generated based on the determined control point, so that a feature such as staying away from a road edge may be implemented. When any one of the lane line, the CIPV, and the adjacent lane of the ego lane exists, and an obstacle exists in the second area, the control trajectory may be generated based on the determined control point, so that a feature such as CAA can be implemented. In this way, different features can be implemented based on the first object and the preset priority information of the first object in the surrounding environment information of the ego vehicle at the current moment, the second object and the weight information corresponding to the second object, and the like, and smooth transition between a plurality of features and scenarios can be ensured.

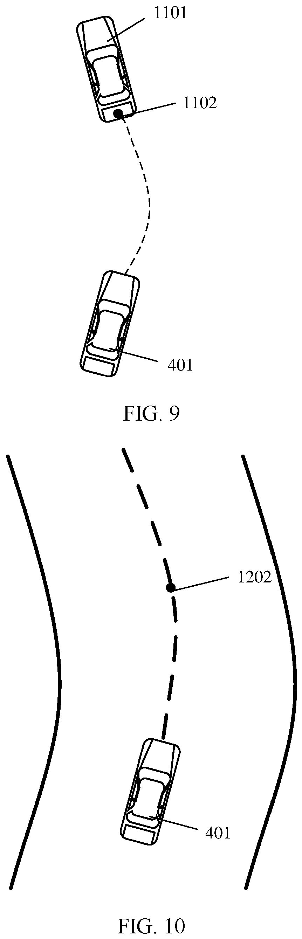

For example, FIG. 9 is a schematic diagram of implementing an OBF feature by using a control point according to an embodiment of this invention. The OBF feature requires that when there is no lane line and only a vehicle exists in front of the ego vehicle, the ego vehicle can travel along a trajectory of the front vehicle. As shown in FIG. 9, in the environment information at the current moment, the lane line of the ego lane does not exist, and the CIPV 1101 exists. In this case, a midpoint 1102 of a rear bumper of the CIPV is selected as a position point. In addition, there is no hard boundary of the lane in the first area, there is no obstacle in the second area, and the position point meets a preset condition. In this case, the position point, that is, the midpoint 1102 of the rear bumper of the CIPV is used as a control point, to generate a control trajectory at the current moment, and implement the OBF feature of the ego vehicle 401.

For example, FIG. 10 is a schematic diagram of implementing an LCC feature by using a control point according to an embodiment of this invention. As shown in FIG. 10, a lane line of an ego lane exists in environment information at a current moment. In this case, a point that is on each of the two lane lines of the ego lane and that is 15 m to 40 m away from the ego vehicle in a longitudinal direction is selected, so that a point 1202 that is on a lane center line of the ego lane and that is 15 m to 40 m away from the ego vehicle in a longitudinal direction is obtained, and the point is used as a position point. In addition, if there is no hard boundary of a lane line in the first area, there is no obstacle in the second area, and the position point meets the preset condition, the position point is used as a control point, to generate a control trajectory at a current moment, so as to implement the LCC feature of the ego vehicle 401.

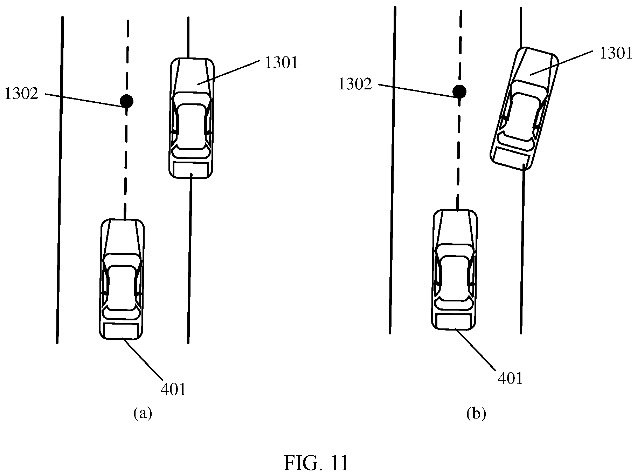

For example, FIG. 11 is a schematic diagram of implementing a TJA feature by using a control point according to an embodiment of this invention. The TJA feature requires that when there is a lane line, but a sensor of an ego vehicle cannot accurately sense position information or shape information of the lane line due to blocking by a front vehicle, that is, lane line data sensed by the sensor cannot meet stability and accuracy requirements of the LCC feature, transverse control is performed by using the front vehicle. In addition, the TJA cannot control the ego vehicle to travel completely according to the trajectory of the front vehicle. When the front vehicle deviates from the ego lane (as shown in FIG. 11(a)) or cuts in or cuts out (as shown in FIG. 11(b)), the ego vehicle still needs to be kept in the ego lane. As shown in FIG. 11(a) and FIG. 11(b), in a current environment, a part of a right lane line of an ego lane is blocked by a CIPV, and a CIPV 1301 exists. In this case, a midpoint 1302 of a rear bumper of the CIPV is selected, a lane center line of the ego lane is used as a reference line, the point 1302 is projected to the lane center line of the ego lane, that is, a point 1303, and the point 1303 is used as a position point. In addition, if there is no hard boundary of the lane in the first area, there is no obstacle in the second area, and the position point meets the preset condition, the position point 1303 is used as a control point, to generate a control trajectory at the current moment, so as to ensure that when the CIPV deviates from the ego lane or cuts in or cuts out, the ego vehicle can still stably stay in the middle of the ego lane, so as to implement the TJA feature of the ego vehicle 401.

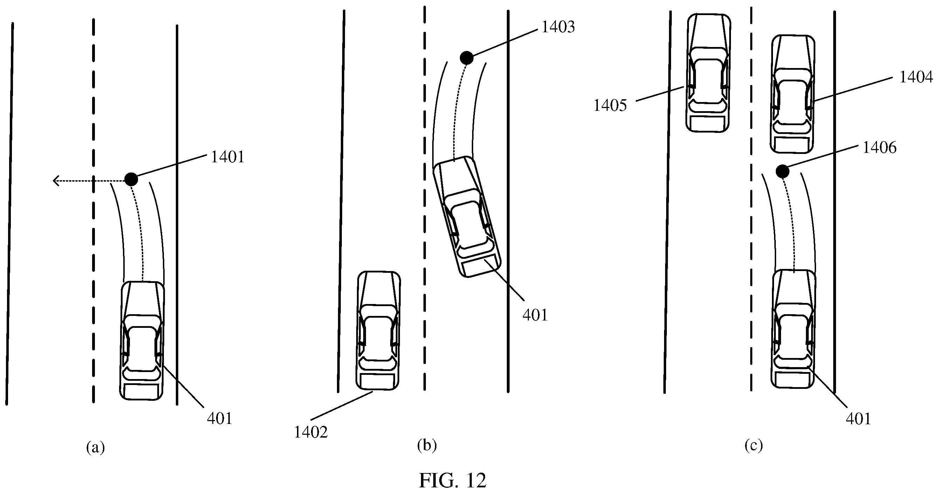

For example, FIG. 12 is a schematic diagram of implementing an ALC/SLC feature by using a control point according to an embodiment of this invention. A process of implementing the ALC feature (as shown in FIG. 12(a) and FIG. 12(b)) and the SLC feature (as shown in FIG. 12(c)) is essentially a process of gradually translating a control point in an ego lane to a lane center line of an adjacent lane. As shown in FIG. 12 (a), in response to a lane change instruction of a driver, in a lane change process, it is determined that a lane line of the ego lane exists in the environment information at the current moment. In this case, a point that is on the lane line of the ego lane and that is at a preset distance from the ego vehicle 401 in a longitudinal direction is selected, and the point is transversely offset by a specific distance toward an adjacent lane (the distance may be determined based on preset lane change duration, a distance between a center line of the ego lane and a center line of the adjacent lane), to obtain a position point 1401. In addition, if there is no hard boundary of the lane in the first area, there is no obstacle in the second area, and the position point meets the preset condition, the position point is used as a control point, to generate a control trajectory at a current moment, so as to implement the SLC feature of the ego vehicle 401. As shown in FIG. 12(b), in response to a lane change instruction of a driver, in a lane change process, it is determined that a lane line of the ego lane exists in the environment information at the current moment. In this case, a point that is on the lane line of the ego lane and that is a preset distance from the ego vehicle 401 in a longitudinal direction is selected, and the point is transversely offset by a specific distance toward the adjacent lane, to obtain a position point. In addition, if an obstacle 1402 exists in the second area, position point offset processing is performed, the offset position point 1403 that meets the preset condition is used as a control point, to generate a control trajectory at the current moment, so as to implement an SLC avoidance feature of the ego vehicle 401. As shown in FIG. 12(c), when a front vehicle 1404 blocks a traffic route of the ego lane, lane change is performed. In a lane change process, it is determined that the lane line of the ego lane exists in the environment information at the current moment. In this case, a point that is on the lane line of the ego lane and that is a preset distance from the ego vehicle 401 in a longitudinal direction is selected, and the point is transversely offset by a specific distance toward the adjacent lane, to obtain a position point. In addition, if obstacles 1405 and 1404 exist in the second area, position point offset processing is performed, the offset position point 1406 that meets the preset condition is used as a control point, to generate a control trajectory at the current moment, so as to implement the ALC feature of the ego vehicle 401.

Step 503: Generate a control trajectory at the current moment based on the control point at the current moment, the control trajectory at the historical moment, and the status information (for example, motion status information) of the ego vehicle at the current moment, where the control trajectory represents a trajectory used to guide traveling of the ego vehicle.

The control trajectory at the historical moment may include a control trajectory generated by a control point at a previous moment. It may be understood that, as the control trajectory is generated in real time, the control trajectory at the historical moment may be obtained. A control trajectory at a historical moment may represent positions of control points at different moments in time domain. In this way, a control trajectory is generated by using time-domain continuity of control points in space, that is, a control curve can be generated in a time dimension by using only one point in space, and various objects in the environment information is reduced to one point. Compared with a manner of generating a control trajectory by using a plurality of points in space domain, this embodiment of this invention does not require generating of a plurality of trajectory lines in advance, thereby greatly reducing a requirement on a computing power and improving performance of the ADAS system.

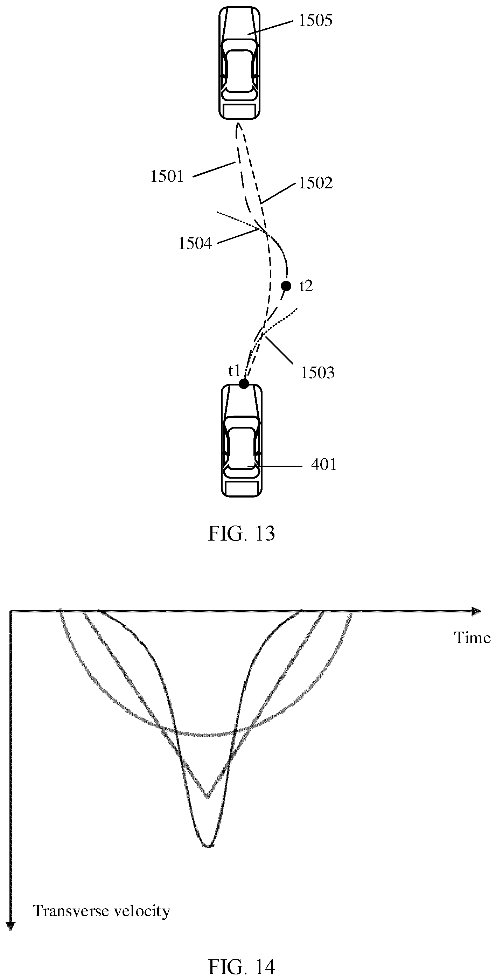

For example, FIG. 13 is a comparison diagram of intelligent driving according to an embodiment of this invention. As shown in FIG. 13, a real trajectory of a target vehicle 1505 is 1501; 1502 is a control trajectory that is of an OBF feature and that is generated through fitting based on the real trajectory 1501 in space by using a least square method; 1503 is a control trajectory at a t1 moment that is of the OBF feature and that is generated by using a control point at the t1 moment, a control trajectory before the t1 moment, and motion status information at the t1 moment; and 1104 is a control trajectory at a t2 moment that is of the OBF feature and that is generated by using a control point at the t2 moment, a control trajectory before the t2 moment (including a control trajectory before the t1 moment), and motion status information at the t2 moment. The trajectory 1501 is generated by fitting a plurality of points in the trajectory 1501 in a spatial dimension, and the trajectories 1503 and 1504 are generated by fitting, in a time dimension, control points at different moments that are determined by using the target vehicle 1505.

For example, the control trajectory may be a third-order curve. In this way, a third-order curve is generated by using the control point at the current moment, the control trajectory at the historical moment, and the motion status information at the current moment. The third-order curve may adapt to some ADAS system architectures. Therefore, an application scope of the intelligent driving method in this invention is extended.

In a possible implementation, the control trajectory at the current moment may be generated by using a filter based on the control point at the current moment, the control trajectory at the historical moment, and the status information of the ego vehicle at the current moment. For example, the filter may be a Kalman filter (Kalman filter). The Kalman filter has temporal continuity. Position information of the control point at the current moment, the control trajectory at the historical moment, and status information of the ego vehicle at the current moment are input to the Kalman filter, and the control trajectory at the current moment is generated by using time-domain continuity of a control point in space, so as to implement different features and improve system performance. It may be understood that, as time goes by, control trajectories at different moments are continuously generated, and control trajectories at historical moments are continuously iterated accordingly.

For example, information such as position information of a midpoint 1102 of the rear bumper of the CIPV in FIG. 10, a control trajectory at a historical moment, and a velocity of the ego vehicle at a current moment, a yaw angular velocity, and a steering radius may be input to the Kalman filter, to generate a control trajectory at the current moment, and trajectory-based vehicle control is performed by using the control trajectory, so as to implement the OBF feature.

For example, information such as position information of a point 1202 that is on the lane center line of the ego lane in FIG. 11 and that is 20 m away from the ego vehicle in a longitudinal direction, a control trajectory at a historical moment, a velocity of the ego vehicle at a current moment, a yaw angular velocity, and a steering radius may be input to the Kalman filter, to generate a control trajectory at a current moment, and control the ego vehicle to stay in the middle of the ego lane by using the control trajectory, so as to implement the LCC feature.

For example, information such as position information of the point 1303 that is obtained by projecting the midpoint 1302 of the rear bumper of the CIPV in FIG. 12 to the lane center line of the ego lane, a control trajectory at a historical moment, a velocity of the ego vehicle at a current moment, a yaw angular velocity, and a steering radius may be input to the Kalman filter, to generate a control trajectory at the current moment, so as to implement the TJA feature. In addition, the control trajectory is generated by using a point on a lane center line instead of directly using the lane center line as the control trajectory, thereby ensuring control smoothness in the TJA feature.

For example, information such as the position information of the control point at the current moment, the control trajectory at the historical moment, the velocity of the ego vehicle at the current moment, the yaw angular velocity, and the steering radius in the lane change process in FIG. 13 may be input to the Kalman filter, to generate the control trajectory at the current moment, and lane change control is performed by using the control trajectory, so as to implement the ALC/SLC feature. Further, in a process of implementing the ALC/SLC feature, to ensure that a lane change process complies with a driver's habit, a large amount of lane change data of the driver is analyzed, to obtain in advance a transverse offset velocity curve corresponding to different lane change duration during lane change. The transverse offset velocity curve represents a transverse velocity change at each moment when the ego vehicle changes a lane. FIG. 14 is a schematic diagram of a transverse offset velocity curve according to an embodiment of this invention. As shown in FIG. 14, the change of the transverse velocity when the driver changes a lane complies with the V-shaped curve. For different lane change duration, there will be a concave or a bulge on the basis of the V-shaped curve. In the lane change process, a corresponding transverse offset velocity curve may be selected based on preset or estimated lane change duration, and a transverse velocity corresponding to each moment is determined based on the transverse offset velocity curve, so as to generate a control trajectory at each moment, thereby achieving a comfortable lane change effect.

It should be noted that the foregoing several features of the ADAS system implemented by using the control point are merely examples. It may be understood that the features implemented by using the control point in this embodiment of this invention are not limited thereto. Other features related to transverse control and longitudinal control in the ADAS system are applicable, and future evolved features will be also applicable, for example, multi-object coordination (Multi-object Coordination, MOC). A control point may be determined based on environment information such as a target vehicle, a vehicle in the adjacent lane, and a vehicle in front of the front vehicle (that is, a vehicle that is located in front of the ego vehicle and that is separated from the ego vehicle by at least one vehicle), to generate a control trajectory, so as to improve experience of the ACC feature in a scenario in which a vehicle on the adjacent lane cuts in at a short distance, a scenario in which a vehicle in the adjacent lane cuts in at a low velocity, a scenario in which a vehicle in front of the front vehicle brakes and the front vehicle cuts out, and the like.

In this embodiment of this invention, the surrounding environment information of the ego vehicle at the current moment and the status information of the ego vehicle at the current moment are obtained; the control point at the current moment is determined based on the environment information and the status information; and the control trajectory at the current moment is generated based on the control point, the control trajectory at the historical moment, and the status information, where the control trajectory represents the trajectory used to guide traveling of the ego vehicle. In this way, based on a driving habit and a thinking mode of a driver, at a current moment, the driver usually focuses on a point in space, where the point is a position to which the driver expects the vehicle to travel. The point is used as a control point. Impact of environment information on features is concentrated on the control point, and a proper control trajectory at the current moment is generated by using the control point, to meet control requirements in different scenarios. In addition, the environment information does not need to be processed in advance to generate a plurality of trajectory lines, thereby greatly reducing a requirement on a computing power and improving performance of an ADAS system. The control point at the current moment may also be sequentially determined based on the preset priority information and the status information of each first object in the environment information. In this way, positions of control points in different scenarios are changed based on a plurality of information sources (that is, first objects in the environment information) and in a manner of sorting priorities of the information sources, and the control point at the current moment is determined, thereby implementing a plurality of features (for example, features such as OBF, LKA, TJA, and LCC). In addition, switching between different features are implemented based on the priorities of the plurality of information sources and corresponding weight information, thereby ensuring smooth transition between the plurality of features or scenarios. Further, switching between different features is implemented without a state machine, thereby reducing logic complexity.

Based on a same inventive concept as that of the foregoing method embodiments, an embodiment of this invention further provides an intelligent driving apparatus. The intelligent driving apparatus is configured to perform the technical solutions described in the foregoing method embodiments.

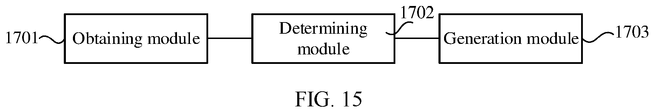

FIG. 15 is a schematic diagram of a structure of an intelligent driving apparatus according to an embodiment of this invention. As shown in FIG. 15, the intelligent driving apparatus may include: an obtaining module 1701, configured to obtain surrounding environment information of an ego vehicle at a current moment and status information of the ego vehicle at the current moment; a determining module 1702, configured to determine a control point at the current moment based on the environment information and the status information; and a generation module 1703, configured to generate a control trajectory at a current moment based on the control point, a control trajectory at a historical moment, and the status information, where the control trajectory represents a trajectory used to guide traveling of an ego vehicle.

In a possible implementation, the determining module 1702 is further configured to sequentially determine the control point at the current moment based on preset priority information of each first object in the environment information and the status information.

In a possible implementation, the first object includes at least one of a lane line of an ego lane of the ego vehicle, a target vehicle, and a vehicle in an adjacent lane of the ego vehicle, where priorities of the lane line of the ego lane, the target vehicle, and the vehicle in the adjacent lane are in descending order.

The determining module 1702 is further configured to: when the lane line of the ego lane exists, use a position point that corresponds to a preset distance on the lane line of the ego lane and that meets a preset condition as the control point at the current moment, where the preset distance is determined based on the status information; if the lane line of the ego lane does not exist, when the target vehicle exists, use a position point that corresponds to the target vehicle and that meets the preset condition as the control point at the current moment; or if neither the lane line of the ego lane nor the target vehicle exists, when a vehicle exists in the adjacent lane, use a position point that is projected by the vehicle in the adjacent lane on the ego lane and that meets the preset condition as the control point at the current moment.

In a possible implementation, the determining module 1702 is further configured to: obtain a position point corresponding to a first object with a highest priority; determine whether a second object exists in a preset area, where the second object is an avoidance object of the ego vehicle in the environment information; and perform offset processing on the position point corresponding to the first object when the second object exists, and use an offset position point as the control point at the current moment.

In a possible implementation, the second object includes a hard boundary of an ego lane, and the preset area is an area that is of a preset size and that is centered on a position point corresponding to the first object.

The determining module 1702 is further configured to: when the hard boundary of the ego lane exists, perform offset processing on the position point corresponding to the first object, so that the hard boundary is outside an area that is of the preset size and that is centered on the offset position point, and the offset position point is in the ego lane; and use the offset position point as a control point at a current moment.

In a possible implementation, the second object includes an obstacle; and the preset area is an area of a preset size in front of the ego vehicle in the ego lane.

The determining module 1702 is further configured to: when the obstacle exists, perform, based on weight information corresponding to the obstacle, offset processing on the position point corresponding to the first object, so that the obstacle is outside an area that is of the preset size and that is centered on the offset position point, and the offset position point is in the ego lane, where the weight information indicates a degree of avoiding the obstacle by the ego vehicle; and use the offset position point as the control point at the current moment.

In a possible implementation, a value of the weight information is determined based on at least one of a time of headway THW, a time to collision TTC, and an invade vehicle width IVW, where the value of the weight information is negatively correlated with the THW, negatively correlated with the TTC, and positively correlated with the IVW.

In a possible implementation, the generation module 1703 is further configured to generate the control trajectory at the current moment based on the control point, the control trajectory at the historical moment, and the status information by using a Kalman filter.

In this embodiment of this invention, the surrounding environment information of the ego vehicle at the current moment and the status information of the ego vehicle at the current moment are obtained; the control point at the current moment is determined based on the environment information and the status information; and the control trajectory at the current moment is generated based on the control point, the control trajectory at the historical moment, and the status information, where the control trajectory represents the trajectory used to guide traveling of the ego vehicle. In this way, based on a driving habit and a thinking mode of a driver, at a current moment, the driver usually focuses on a point in space, where the point is a position to which the driver expects the vehicle to travel. The point is used as a control point. Impact of environment information on features is concentrated on the control point, and a proper control trajectory at the current moment is generated by using the control point, to meet control requirements in different scenarios. In addition, the environment information does not need to be processed in advance to generate a plurality of trajectory lines, thereby greatly reducing a requirement on a computing power and improving performance of an ADAS system. The control point at the current moment may also be sequentially determined based on the preset priority information and the status information of each first object in the environment information. In this way, a position of the control point is changed based on a plurality of information sources (that is, each first object in the environment information), the control point at the current moment is determined in a manner of sorting priorities of the information sources, and different first objects correspond to different features, so as to implement a plurality of features (for example, features such as OBF, LKA, TJA, and LCC). In addition, switching between different features are implemented according to the priorities of the plurality of information sources and corresponding weight information, thereby ensuring smooth transition between the plurality of features or scenarios. Further, switching between different features is implemented without a state machine, thereby reducing logic complexity.

For various possible implementations or descriptions of the foregoing embodiment, refer to the foregoing descriptions. Details are not described herein again.

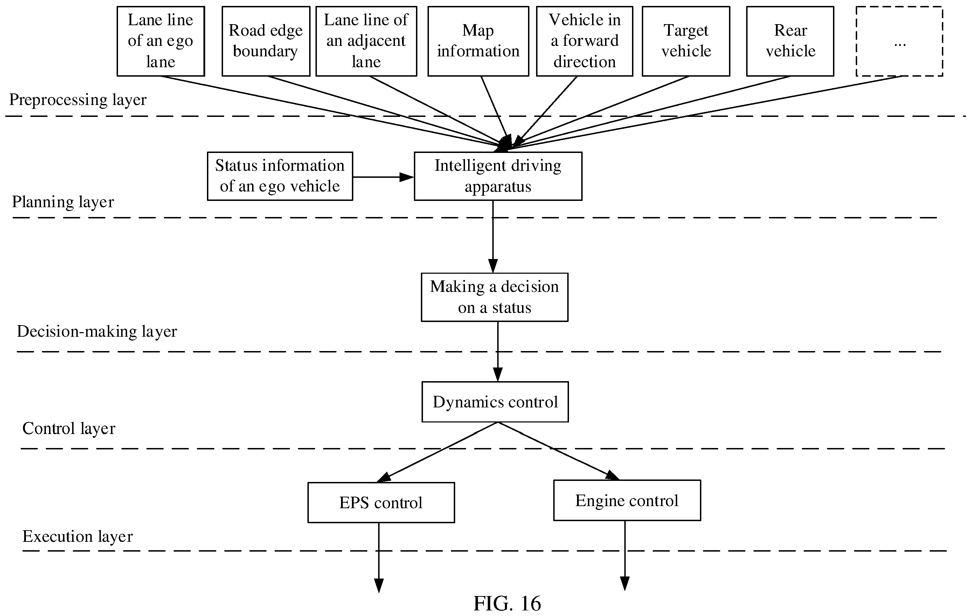

An embodiment of this invention further provides a new ADAS system architecture. FIG. 16 is a diagram of an ADAS system architecture according to an embodiment of this invention. As shown in FIG. 16, the ADAS system architecture includes: a preprocessing layer, a planning layer, a decision-making layer, a control layer, and the like, and may further include an execution layer and the like.

The preprocessing layer is used to generate surrounding environment information of the ego vehicle at a current moment. For example, the preprocessing layer may process data detected by a sensor installed on the ego vehicle, to obtain the surrounding environment information of the ego vehicle. In addition, the preprocessing layer may obtain map information based on GPS data and high-precision map data, such as a distance between a vehicle and an intersection ahead or a lane on which the vehicle is located.

The planning layer is used to: determine a control point at a current moment based on the environment information and status information of the ego vehicle at the current moment; and generate a control trajectory at the current moment based on the control point, a control trajectory at a historical moment, and the status information, where the control trajectory represents a trajectory used to guide traveling of the ego vehicle. This layer uses the environment information obtained by the preprocessing layer as an input; performs the intelligent driving method in this invention by using an intelligent driving apparatus and with reference to the status information (which may include driving status information and the status information of the ego vehicle) of the ego vehicle, so as to determine a feature (or referred to as a function) applicable to a current scenario and a control trajectory corresponding to the feature; and inputs the control trajectory to the decision-making layer.

Further, the planning layer may further sequentially determine the control point at the current moment based on preset priority information of each first object in the environment information and the status information. The planning layer may further obtain a position point corresponding to a first object with a highest priority; determine whether a second object exists in a preset area, where the second object is an avoidance object of the ego vehicle in the environment information; and perform offset processing on the position point corresponding to the first object when the second object exists, and use an offset position point as the control point at the current moment.

The decision-making layer is used to determine whether the control trajectory is suitable for an operating status of the ego vehicle at the current moment. For example, this layer uses the control trajectory generated by the planning layer as an input; determines, based on an operating status of each component (such as a sensor, a motor, an electric power steering system) in the ego vehicle at the current moment, whether the control trajectory is suitable for the operating status of the ego vehicle at the current moment; and inputs the control trajectory to the control layer when it is determined that the control trajectory is suitable for the operating state of the ego vehicle at the current moment.

The control layer is used to: when the control trajectory is suitable for the operating state of the ego vehicle at the current moment, generate a control signal at the current moment based on the control trajectory, where the control signal is used for assisted driving of the vehicle. For example, this layer uses the control trajectory generated by the decision-making layer as an input, and generates a control signal such as a steering angle or an acceleration with reference to dynamics information of the vehicle.

Further, the system may further include an execution layer. The execution layer uses the control signal generated by the control layer as an input, and executes the control signal, for example, executing the control signal by using an electric power steering (Electric Power Steering, EPS) system and an engine, so as to implement assisted driving of the vehicle.

In the foregoing ADAS system, impact of each object in the environment information on a feature is concentrated on a point in space by using a planning layer, the point is used as a control point, and a control trajectory is generated by using continuity of the control point in a time dimension, so as to implement different features. In this way, only a trajectory generator that is used to generate a control trajectory by using a control point is needed, and a plurality of trajectory generators are not needed, thereby greatly reducing a requirement on a computing power and improving system performance. In addition, compared with a solution in which scenario determining and switching are implemented under complex switching conditions and transition logic by using a state machine, in the foregoing ADAS system, the planning layer determines a control point at each moment by using preset priorities of different objects in the environment information and the corresponding weight information, so as to implement smooth transition between different features and scenarios. In addition, in the foregoing ADAS system, if a new feature is added, only processing for an object corresponding to the feature needs to be added at the preprocessing layer, and information such as a priority of an object corresponding to the newly added feature and corresponding weight information may be set. A trajectory line for the feature does not need to be generated, and a state machine does not need to be adjusted. Therefore, scalability of the system is high.

An embodiment of this invention provides an intelligent driving apparatus, including a processor and a memory configured to store instructions executable by the processor, where the processor is configured to implement the foregoing intelligent driving method when executing the instructions.

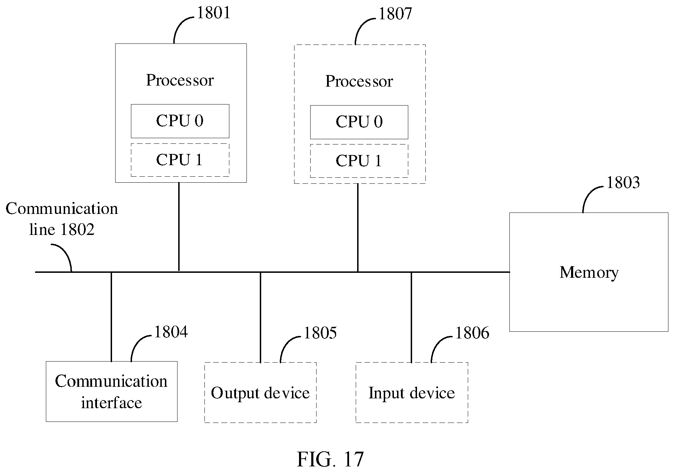

FIG. 17 is a schematic diagram of a structure of another intelligent driving apparatus according to an embodiment of this invention. As shown in FIG. 17, the intelligent driving apparatus may include at least one processor 1801, a communication line 1802, a memory 1803, and at least one communication interface 1804.

The processor 1801 may be a general-purpose central processing unit (central processing unit, CPU), a microprocessor, an application-specific integrated circuit (application-specific integrated circuit, ASIC), or one or more integrated circuits for controlling program execution of the solutions of this invention.

The communication line 1802 may include a path for transmitting information between the foregoing components.

The communication interface 1804 is any apparatus such as a transceiver, and configured to communicate with another device or communication network such as the Ethernet, a RAN, or a wireless local area network (wireless local area networks, WLAN).

The memory 1803 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium, another magnetic storage device, or any other medium that can carry or store expected program code in a form of an instruction or a data structure and that can be accessed by a computer, but is not limited thereto. The memory may exist independently, and is connected to the processor through the communication line 1802. Alternatively, the memory may be integrated with the processor. The memory provided in this embodiment of this invention may be usually non-volatile. The memory 1803 is configured to store computer executable instructions for executing the solutions of this invention, and the processor 1801 controls the execution. The processor 1801 is configured to execute the computer executable instructions stored in the memory 1803, to implement the methods provided in the foregoing embodiments of this invention.

Optionally, the computer executable instructions in this embodiment of this invention may also be referred to as application code.

During specific implementation, in an embodiment, the processor 1801 may include one or more CPUs, for example, a CPU 0 and a CPU 1 in FIG. 17.

During specific implementation, in an embodiment, the intelligent driving apparatus may include a plurality of processors such as the processor 1801 and a processor 1807 in FIG. 17. Each of these processors may be a single-core (single-CPU) processor or a multi-core (multi-CPU) processor. The processor herein may be one or more devices, circuits, and/or processing cores configured to process data (for example, computer program instructions).

During specific implementation, in an embodiment, the intelligent driving apparatus may further include an output device 1805 and an input device 1806. The output device 1805 communicates with the processor 1801, and may display information in a plurality of manners. For example, the output device 1805 may be a liquid crystal display (liquid crystal display, LCD), a light emitting diode (light emitting diode, LED) display device, a cathode ray tube (cathode ray tube, CRT) display device, a projector (projector), or the like. The input device 1806 communicates with the processor 1801, and may receive an input from a user in a plurality of manners. For example, the input device 1806 may be a mouse, a keyboard, a touchscreen device, or a sensing device.

Disclosed herein is also an advanced driver assistant system, applied to self-driving or intelligent driving. The advanced driver assistant system includes at least one intelligent driving apparatus mentioned in the foregoing embodiments of this invention, and may further include at least one of other sensors such as a camera or a radar. The sensor is configured to sense environment information. At least one apparatus in the system may be integrated into an entire system or a device, or the at least one apparatus in the system may be independently disposed as an element or an apparatus.

Disclosed herein is also a vehicle, where the vehicle includes at least one intelligent driving apparatus mentioned above or any one of the foregoing systems.

Disclosed herein is also a non-volatile computer-readable storage medium. The non-volatile computer-readable storage medium stores computer program instructions. When the computer program instructions are executed by a processor, the foregoing method is implemented.

Disclosed herein is also a computer program product, including computer-readable code or a non-volatile computer-readable storage medium carrying computer-readable code. When the computer-readable code is run in a processor of an electronic device, the processor in the electronic device performs the foregoing method.

The computer-readable storage medium can be a tangible device that can retain and store instructions for use by an instruction execution device. The computer-readable storage medium may be, for example, an electrical storage device, a magnetic storage device, an optical storage device, an electromagnetic storage device, a semiconductor storage device, or any suitable combination thereof. More specific examples (non-exhaustive list) of computer-readable storage media include: portable computer disks, hard disks, random access memory (Random Access Memory, RAM), read-only memory (Read Only Memory, ROM), erasable programmable read-only memory (Electrically Programmable Read-Only-Memory, EPROM, or flash memory), static random access memory (Static Random-Access Memory, SRAM), portable compact disk read-only memory (Compact Disc Read-Only Memory, CD-ROM), digital multi-function disk (Digital Video Disc, DVD), memory sticks, floppy disks, mechanical coding devices, for example, a punched card that stores an instruction or a protrusion structure that includes a groove and that stores an instruction, and any suitable combination thereof.

Computer-readable program instructions or code described herein can be downloaded to respective computing/processing devices from a computer-readable storage medium or to an external computer or external storage device through a network, such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network and forwards the computer-readable program instructions for storage in a computer-readable storage medium in each computing/processing device.

A computer program instruction used to perform an operation may be an assembly instruction, an instruction set architecture (Instruction Set Architecture, ISA) instruction, a machine instruction, a machine-related instruction, microcode, a firmware instruction, status setting data, or source code or object code written in any combination of one or more programming languages. The programming languages include an object-oriented programming language such as Smalltalk and C++, and a conventional procedural programming language such as a "C" language or a similar programming language. The computer-readable program instructions may be executed entirely on a user computer, partly on the user computer, as a stand-alone software package, partly on the user computer and partly on a remote computer, or entirely on the remote computer or a server. When a remote computer is used, the remote computer may be connected to a user computer through any type of network, including a local area network (Local Area Network, LAN) or a wide area network (Wide Area Network, WAN), or may be connected to an external computer (for example, connected by using an Internet service provider through the Internet). In some embodiments, an electronic circuit, for example, a programmable logic circuit, a field programmable gate array (Field Programmable Gate Array, FPGA), or a programmable logic array (Programmable Logic Array, PLA), is customized by using status information of the computer-readable program instructions. The electronic circuit may execute the computer-readable program instructions, so as to implement the various aspects of this invention.

The various aspects of this invention are described herein with reference to the flowcharts and/or block diagrams of the method, and the apparatus (system), according to embodiments of this invention. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/actions specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/actions specified in the one or more blocks in the flowcharts and/or the block diagrams.

The computer-readable program instructions may alternatively be loaded onto a computer, another programmable data processing apparatus, or another device so that a series of operation steps is performed on the computer, the another programmable data processing apparatus, or the another device to produce a computer-implemented process. Therefore, the instructions executed on the computer, the another programmable data processing apparatus, or the another device implements the functions/actions specified in the one or more blocks in the flowcharts and/or block diagrams.

The flowcharts and block diagrams in the accompanying drawings show the system architecture, function, and operation of possible implementations of this invention. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a used function.

It should also be noted that each block in the block diagram and/or the flowchart, and a combination of blocks in the block diagram and/or the flowchart may be implemented by hardware (for example, a circuit or an ASIC (Application Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

The foregoing descriptions are merely specific implementations of the present invention, but are not intended to limit the protection scope of the present invention. Therefore, the protection scope of the present invention shall be subject to the protection scope of the claims.

## Claims

1. An intelligent driving method, wherein the method comprises:
obtaining surrounding environment information of an ego vehicle (401) at a current moment and status information of the ego vehicle (401) at the current moment;
determining a control point at the current moment based on the environment information and the status information; and
generating a control trajectory at the current moment based on the control point, a control trajectory at a historical moment, and the status information, wherein the control trajectory represents a trajectory used to guide traveling of the ego vehicle (401),
wherein the determining a control point at the current moment based on the environment information and the status information comprises:
sequentially determining the control point at the current moment based on preset priority information of each first object in the environment information and the status information,
wherein the first object comprises a lane line (403) of an ego lane, a target vehicle, and a vehicle in an adjacent lane,
**characterized in that** priorities of the lane line (403) of the ego lane, the target vehicle, and the vehicle in the adjacent lane are in descending order; and
the sequentially determining the control point at the current moment based on preset priority information of each first object in the environment information and the status information comprises:
when the lane line (403) of the ego lane exists, using a position point (1401) that corresponds to a preset distance on the lane line (403) of the ego lane and that meets a preset condition as the control point at the current moment, wherein the preset distance is determined based on the status information;
if the lane line (403) of the ego lane does not exist, when the target vehicle exists, using a position point (1401) that corresponds to the target vehicle and that meets the preset condition as the control point at the current moment; or
if the lane line (403) of the ego lane does not exist and the target vehicle does not exist, when a vehicle exists in the adjacent lane, using a position point (1401) that is projected by the vehicle in the adjacent lane on the ego lane and that meets the preset condition as the control point at the current moment.

2. The method according to claim 1, wherein the sequentially determining the control point at the current moment based on preset priority information of each first object in the environment information and the status information comprises:
obtaining a position point (1401) corresponding to a first object with a highest priority;
determining whether a second object exists in a preset area, wherein the second object is an avoidance object of the ego vehicle (401) in the environment information; and
performing offset processing on the position point (1401) corresponding to the first object when the second object exists, and using an offset position point (1403; 1406) as the control point at the current moment.

3. The method according to claim 2, wherein the second object comprises a hard boundary of the ego lane, and the preset area is an area that is of a preset size and that is centered on the position point (1401) corresponding to the first object; and
the performing offset processing on the position point (1401) corresponding to the first object when the second object exists, and using an offset position point (1403; 1406) as the control point at the current moment comprises:
when the hard boundary of the ego lane exists, performing offset processing on the position point (1401) corresponding to the first object, so that the hard boundary is outside an area that is of the preset size and that is centered on the offset position point (1403; 1406), and the offset position point (1403; 1406) is in the ego lane; and
using the offset position point (1403; 1406) as the control point at the current moment.

4. The method according to claim 2, wherein the second object comprises an obstacle (1402; 1405); and the preset area is an area of a preset size in front of the ego vehicle (401) in the ego lane; and
the performing offset processing on the position point (1401) corresponding to the first object when the second object exists, and using an offset position point (1403; 1406) as the control point at the current moment comprises:
when the obstacle (1402; 1405) exists, performing, based on weight information corresponding to the obstacle (1402; 1405), offset processing on the position point (1401) corresponding to the first object, so that the obstacle (1402; 1405) is outside an area that is of the preset size and that is centered on the offset position point (1403; 1406), and the offset position point (1403; 1406) is in the ego lane, wherein the weight information indicates a degree of avoiding the obstacle (1402; 1405) by the ego vehicle (401); and
using the offset position point (1403; 1406) as the control point at the current moment.

5. The method according to claim 4, wherein a value of the weight information is determined based on at least one of a time of headway THW, a time to collision TTC, and an invade vehicle (701) width IVW, wherein the value of the weight information is negatively correlated with the THW, negatively correlated with the TTC, and positively correlated with the IVW.

6. The method according to claim 1, wherein the generating a control trajectory at the current moment based on the control point, a control trajectory at a historical moment, and the status information comprises:
generating the control trajectory at the current moment based on the control point, the control trajectory at the historical moment, and the status information by using a Kalman filter.

7. An intelligent driving apparatus, wherein the apparatus comprises:
an obtaining module (1701), configured to obtain surrounding environment information of an ego vehicle (401) at a current moment and status information of the ego vehicle (401) at the current moment;
a determining module (1702), configured to determine control points at the current moment based on the environment information and the status information; and
a generation module (1703), configured to generate a control trajectory at the current moment based on the control points, a control trajectory at a historical moment, and the status information, wherein the control trajectory represents a trajectory used to guide traveling of the ego vehicle (401),
wherein the determining module (1702) is further configured to sequentially determine the control point at the current moment based on preset priority information of each first object in the environment information and the status information,
wherein the first object comprises a lane line (403) of an ego lane, a target vehicle, and a vehicle in an adjacent lane,
**characterized in that** priorities of the lane line (403) of the ego lane, the target vehicle, and the vehicle in the adjacent lane are in descending order; and
the determining module (1702) is further configured to: when the lane line (403) of the ego lane exists, use a position point (1401) that corresponds to a preset distance on the lane line (403) of the ego lane and that meets a preset condition as the control point at the current moment, wherein the preset distance is determined based on the status information; if the lane line (403) of the ego lane does not exist, when the target vehicle exists, use a position point (1401) that corresponds to the target vehicle and that meets the preset condition as the control point at the current moment; or if neither the lane line (403) of the ego lane nor the target vehicle exists, when a vehicle exists in the adjacent lane, use a position point (1401) that is projected by the vehicle in the adjacent lane on the ego lane and that meets the preset condition as the control point at the current moment.

8. The apparatus according to claim 7, wherein the determining module (1702) is further configured to: obtain a position point (1401) corresponding to a first object with a highest priority; determine whether a second object exists in a preset area, wherein the second object is an avoidance object of the ego vehicle (401) in the environment information; and perform offset processing on the position point (1401) corresponding to the first object when the second object exists, and use an offset position point (1403; 1406) as the control point at the current moment.

9. The apparatus according to claim 8, wherein the second object comprises a hard boundary of an ego lane, and the preset area is an area that is of a preset size and that is centered on a position point (1401) corresponding to the first object; and
the determining module (1702) is further configured to: when the hard boundary of the ego lane exists, perform offset processing on the position point (1401) corresponding to the first object, so that the hard boundary is outside an area that is of the preset size and that is centered on the offset position point (1403; 1406), and the offset position point (1403; 1406) is in the ego lane; and use the offset position point (1403; 1406) as the control point at the current moment.

10. The apparatus according to claim 8, wherein the second object comprises an obstacle (1402; 1405); and the preset area is an area of a preset size in front of the ego vehicle (401) in the ego lane; and
the determining module (1702) is further configured to: when the obstacle (1402; 1405) exists, perform, based on weight information corresponding to the obstacle (1402; 1405), offset processing on the position point (1401) corresponding to the first object, so that the obstacle (1402; 1405) is outside an area that is of the preset size and that is centered on the offset position point (1403; 1406), and the offset position point (1403; 1406) is in the ego lane, wherein the weight information indicates a degree of avoiding the obstacle (1402; 1405) by the ego vehicle (401); and use the offset position point (1403; 1406) as the control point at the current moment.

## Patentansprüche

1. Intelligentes Fahrverfahren, wobei das Verfahren umfasst:
Erhalten von Umgebungsinformationen eines Ego-Fahrzeugs (401) zu einem aktuellen Zeitpunkt und von Statusinformationen des Ego-Fahrzeugs (401) zu dem aktuellen Zeitpunkt;
Bestimmen eines Steuerpunkts zu dem aktuellen Zeitpunkt basierend auf den Umgebungsinformationen und den Statusinformationen; und
Erzeugen einer Steuertrajektorie zu dem aktuellen Zeitpunkt basierend auf dem Steuerpunkt, einer Steuertrajektorie zu einem historischen Zeitpunkt und den Statusinformationen, wobei die Steuertrajektorie eine Trajektorie darstellt, die verwendet wird, um ein Fahren des Ego-Fahrzeugs (401) zu lenken,
wobei das Bestimmen eines Steuerpunkts zu dem aktuellen Zeitpunkt basierend auf den Umgebungsinformationen und den Statusinformationen umfasst:
sequentielles Bestimmen des Steuerpunkts zu dem aktuellen Zeitpunkt basierend auf voreingestellten Prioritätsinformationen jedes ersten Objekts in den Umgebungsinformationen und den Statusinformationen,
wobei das erste Objekt eine Spurlinie (403) einer eigenen Spur, ein Zielfahrzeug und ein Fahrzeug auf einer benachbarten Spur umfasst,
**dadurch gekennzeichnet, dass** Prioritäten der Spurlinie (403) der Ego-Spur, des Zielfahrzeugs und des Fahrzeugs auf der benachbarten Spur in absteigender Reihenfolge sind; und
das sequentielle Bestimmen des Steuerpunkts zu dem aktuellen Zeitpunkt basierend auf voreingestellten Prioritätsinformationen jedes ersten Objekts in den Umgebungsinformationen und den Statusinformationen umfasst:
wenn die Spurlinie (403) der Ego-Spur existiert, Verwenden eines Positionspunkts (1401), der einem voreingestellten Abstand auf der Spurlinie (403) der Ego-Spur entspricht und der eine voreingestellte Bedingung erfüllt, als den Steuerpunkt zu dem aktuellen Zeitpunkt, wobei der voreingestellte Abstand basierend auf den Statusinformationen bestimmt wird;
falls die Spurlinie (403) der Ego-Spur nicht existiert, wenn das Zielfahrzeug existiert, Verwenden eines Positionspunkts (1401), der dem Zielfahrzeug entspricht und der die voreingestellte Bedingung erfüllt, als den Steuerpunkt zu dem aktuellen Zeitpunkt; oder
falls die Spurlinie (403) der Ego-Spur nicht existiert und das Zielfahrzeug nicht existiert, wenn ein Fahrzeug auf der benachbarten Spur existiert, unter Verwendung eines Positionspunkts (1401), der durch das Fahrzeug auf der benachbarten Spur auf die Ego-Spur projiziert wird und der die voreingestellte Bedingung zu dem aktuellen Zeitpunkt erfüllt, als den Steuerpunkt.

2. Verfahren nach Anspruch 1, wobei das sequentielle Bestimmen des Steuerpunkts zu dem aktuellen Zeitpunkt basierend auf voreingestellten Prioritätsinformationen jedes ersten Objekts in den Umgebungsinformationen und den Statusinformationen umfasst:
Erhalten eines Positionspunkts (1401), der einem ersten Objekt mit einer höchsten Priorität entspricht;
Bestimmen, ob ein zweites Objekt in einem voreingestellten Bereich existiert, wobei das zweite Objekt ein Ausweichobjekt des Ego-Fahrzeugs (401) in den Umgebungsinformationen ist; und
Durchführen einer Versatzverarbeitung an dem Positionspunkt (1401), der dem ersten Objekt entspricht, wenn das zweite Objekt existiert, und Verwenden eines Versatzpositionspunkts (1403; 1406) als den Steuerpunkt zu dem aktuellen Zeitpunkt.

3. Verfahren nach Anspruch 2, wobei das zweite Objekt eine harte Grenze der Ego-Spur umfasst, und der voreingestellte Bereich ein Bereich ist, der eine voreingestellte Größe hat und der auf dem Positionspunkt (1401) zentriert ist, der dem ersten Objekt entspricht; und
das Durchführen der Versatzverarbeitung an dem Positionspunkt (1401), der dem ersten Objekt entspricht, wenn das zweite Objekt existiert, und das Verwenden eines Versatzpositionspunkts (1403; 1406) als den Steuerpunkt zu dem aktuellen Zeitpunkt umfasst:
wenn die harte Grenze der Ego-Spur existiert, Durchführen der Versatzverarbeitung an dem Positionspunkt (1401), der dem ersten Objekt entspricht, so dass die harte Grenze außerhalb eines Bereichs, der die voreingestellte Größe hat und der auf den Versatzpositionspunkt (1403; 1406) zentriert ist, liegt, und der Versatzpositionspunkt (1403; 1406) in der Ego-Spur liegt; und
Verwenden des Versatzpositionspunkts (1403; 1406) als den Steuerpunkt zu dem aktuellen Zeitpunkt.

4. Verfahren nach Anspruch 2, wobei das zweite Objekt ein Hindernis (1402; 1405) umfasst; und der voreingestellte Bereich ein Bereich einer voreingestellten Größe vor dem Ego-Fahrzeug (401) auf der Ego-Spur ist; und
das Durchführen der Versatzverarbeitung an dem Positionspunkt (1401), der dem ersten Objekt entspricht, wenn das zweite Objekt existiert, und das Verwenden eines Versatzpositionspunkts (1403; 1406) als den Steuerpunkt zu dem aktuellen Zeitpunkt umfasst:
wenn das Hindernis (1402; 1405) existiert, Durchführen der Versatzverarbeitung an dem Positionspunkt (1401), der dem ersten Objekt entspricht, basierend auf Gewichtsinformationen, die dem Hindernis (1402; 1405) entsprechen, so dass das Hindernis (1402; 1405) außerhalb eines Bereichs, der die voreingestellte Größe hat und der auf den Versatzpositionspunkt (1403; 1406) zentriert ist, liegt, und der Versatzpositionspunkt (1403; 1406) in der Ego-Spur liegt, wobei die Gewichtsinformationen einen Grad eines Umgehens des Hindernisses (1402; 1405) durch das Ego-Fahrzeug (401) angeben; und
Verwenden des Versatzpositionspunkts (1403; 1406) als den Steuerpunkt zu dem aktuellen Zeitpunkt.

5. Verfahren nach Anspruch 4, wobei ein Wert der Gewichtsinformationen basierend auf mindestens einem von einer Vorfahrtszeit THW, einer Zeit bis zu einer Kollision TTC und einer Breite des eindringenden Fahrzeugs (701) IVW bestimmt wird, wobei der Wert der Gewichtsinformationen negativ mit der THW korreliert, negativ mit der TTC korreliert und positiv mit der IVW korreliert.

6. Verfahren nach Anspruch 1, wobei das Erzeugen einer Steuertrajektorie zu dem aktuellen Zeitpunkt basierend auf dem Steuerpunkt, einer Steuertrajektorie zu einem historischen Zeitpunkt und den Statusinformationen umfasst:
Erzeugen der Steuertrajektorie zu dem aktuellen Zeitpunkt basierend auf dem Steuerpunkt, der Steuertrajektorie zu dem historischen Zeitpunkt und den Zustandsinformationen durch Verwenden eines Kalman-Filters.

7. Intelligente Fahrvorrichtung, wobei die Vorrichtung umfasst:
ein Erfassungsmodul (1701), das konfiguriert ist, um Umgebungsinformationen eines Ego-Fahrzeugs (401) zu einem aktuellen Zeitpunkt und Statusinformationen des Ego-Fahrzeugs (401) zu dem aktuellen Zeitpunkt zu erfassen;
ein Bestimmungsmodul (1702), das konfiguriert ist, um Steuerpunkte zu dem aktuellen Zeitpunkt basierend auf den Umgebungsinformationen und den Statusinformationen zu bestimmen; und
ein Erzeugungsmodul (1703), das konfiguriert ist, um eine Steuertrajektorie zu dem aktuellen Zeitpunkt basierend auf den Steuerpunkten, einer Steuertrajektorie zu einem historischen Zeitpunkt und den Statusinformationen zu erzeugen, wobei die Steuertrajektorie eine Trajektorie darstellt, die verwendet wird, um das Fahren des Ego-Fahrzeugs (401) zu lenken,
wobei das Bestimmungsmodul (1702) ferner konfiguriert ist, um den Steuerpunkt in dem aktuellen Moment basierend auf voreingestellten Prioritätsinformationen jedes ersten Objekts in den Umgebungsinformationen und den Statusinformationen sequenziell zu bestimmen,
wobei das erste Objekt eine Spurlinie (403) einer Ego-Spur, ein Zielfahrzeug und ein Fahrzeug auf einer benachbarten Spur umfasst,
**dadurch gekennzeichnet, dass** Prioritäten der Spurlinie (403) der Ego-Spur, des Zielfahrzeugs und des Fahrzeugs auf der benachbarten Spur in absteigender Reihenfolge sind; und
das Bestimmungsmodul (1702) ferner konfiguriert ist zum: wenn die Spurlinie (403) der Ego-Spur existiert, Verwenden eines Positionspunkts (1401), der einem voreingestellten Abstand auf der Spurlinie (403) der Ego-Spur entspricht und der eine voreingestellte Bedingung erfüllt, als den Steuerpunkt zu dem aktuellen Zeitpunkt,
wobei der voreingestellte Abstand basierend auf den Statusinformationen bestimmt wird; falls die Spurlinie (403) der Ego-Spur nicht existiert, wenn das Zielfahrzeug existiert, Verwenden eines Positionspunkts (1401), der dem Zielfahrzeug entspricht und der die voreingestellte Bedingung erfüllt, als den Steuerpunkt zu dem aktuellen Zeitpunkt; oder, falls weder die Spurlinie (403) der Ego-Spur noch das Zielfahrzeug existiert, wenn auf der benachbarten Spur ein Fahrzeug existiert, Verwenden eines Positionspunkts (1401), der durch das Fahrzeug auf der benachbarten Spur auf die Ego-Spur projiziert wird und der die voreingestellte Bedingung erfüllt, als den Steuerpunkt zu dem aktuellen Zeitpunkt.

8. Vorrichtung nach Anspruch 7, wobei das Bestimmungsmodul (1702) ferner konfiguriert ist zum: Erhalten eines Positionspunkts (1401), der einem ersten Objekt mit der höchsten Priorität entspricht; Bestimmen, ob ein zweites Objekt in einem voreingestellten Bereich existiert, wobei das zweite Objekt ein Ausweichobjekt des Ego-Fahrzeugs (401) in den Umgebungsinformationen ist; und Durchführen der Versatzverarbeitung an dem Positionspunkt (1401), der dem ersten Objekt entspricht, wenn das zweite Objekt existiert, und Verwenden eines Versatzpositionspunkts (1403; 1406) als den Steuerpunkt zu dem aktuellen Zeitpunkt.

9. Vorrichtung nach Anspruch 8, wobei das zweite Objekt eine harte Grenze einer Ego-Spur umfasst, und der voreingestellte Bereich ein Bereich ist, der eine voreingestellte Größe hat und der auf dem Positionspunkt (1401) zentriert ist, der dem ersten Objekt entspricht; und
das Bestimmungsmodul (1702) ferner konfiguriert ist zum: wenn die harte Grenze der Ego-Spur existiert, Durchführen der Versatzverarbeitung an dem Positionspunkt (1401), der dem ersten Objekt entspricht, so dass die harte Grenze außerhalb eines Bereichs, der die voreingestellte Größe hat und der auf den Versatzpositionspunkt (1403; 1406) zentriert ist, liegt, und der Versatzpositionspunkt (1403; 1406) in der Ego-Spur liegt; und Verwenden des Versatzpositionspunkts (1403; 1406) als den Steuerpunkt zu dem aktuellen Zeitpunkt.

10. Vorrichtung nach Anspruch 8, wobei das zweite Objekt ein Hindernis (1402; 1405) umfasst; und der voreingestellte Bereich ein Bereich einer voreingestellten Größe vor dem Ego-Fahrzeug (401) auf der Ego-Spur ist; und
das Bestimmungsmodul (1702) ferner konfiguriert ist zum: wenn das Hindernis (1402; 1405) existiert, Durchführen der Versatzverarbeitung an dem Positionspunkt (1401), der dem ersten Objekt entspricht, basierend auf Gewichtsinformationen, die dem Hindernis (1402; 1405) entsprechen, so dass das Hindernis (1402; 1405) außerhalb eines Bereichs, der die voreingestellte Größe hat und der auf den Versatzpositionspunkt (1403; 1406) zentriert ist, liegt und der Versatzpositionspunkt (1403; 1406) in der Ego-Spur liegt, wobei die Gewichtsinformationen einen Grad des Umgehens des Hindernisses (1402; 1405) durch das Ego-Fahrzeug (401) angeben;
und Verwenden des Versatzpositionspunkts (1403; 1406) als den Steuerpunkt zu dem aktuellen Zeitpunkt.

## Revendications

1. Procédé de conduite intelligente, dans lequel le procédé comprend :
l'obtention d'informations de milieu environnant d'un égo-véhicule (401) à un moment actuel et d'informations d'état de l'égo-véhicule (401) au moment actuel ;
la détermination d'un point de commande au moment actuel sur la base des informations de milieu et des informations d'état ; et
la génération d'une trajectoire de commande au moment actuel sur la base du point de commande, d'une trajectoire de commande à un moment antérieur et des informations d'état, dans lequel la trajectoire de commande représente une trajectoire utilisée pour guider le déplacement de l'égo-véhicule (401),
dans lequel la détermination d'un point de commande au moment actuel sur la base des informations de milieu et des informations d'état comprend :
la détermination séquentielle du point de commande au moment actuel sur la base d'informations de priorité prédéfinies de chaque premier objet dans les informations de milieu et les informations d'état,
dans lequel le premier objet comprend une ligne de délimitation des voies (403) d'une égo-voie, un véhicule cible et un véhicule dans une voie adjacente,
**caractérisé en ce que** des priorités de la ligne de délimitation des voies (403) de l'égo-voie, du véhicule cible et du véhicule dans la voie adjacente sont dans l'ordre décroissant ; et
la détermination séquentielle du point de commande au moment actuel sur la base d'informations de priorité prédéfinies de chaque premier objet dans les informations de milieu et les informations d'état comprend :
lorsque la ligne de délimitation des voies (403) de l'égo-voie existe, l'utilisation d'un point de position (1401) qui correspond à une distance prédéfinie sur la ligne de délimitation des voies (403) de l'égo-voie et qui satisfait à une condition prédéfinie en tant que point de commande au moment actuel, dans lequel la distance prédéfinie est déterminée sur la base des informations d'état ;
si la ligne de délimitation des voies (403) de l'égo-voie n'existe pas, lorsque le véhicule cible existe, l'utilisation d'un point de position (1401) qui correspond au véhicule cible et qui satisfait à la condition prédéfinie en tant que point de commande au moment actuel ; ou
si la ligne de délimitation des voies (403) de l'égo-voie n'existe pas et que le véhicule cible n'existe pas, lorsqu'un véhicule existe dans la voie adjacente, l'utilisation d'un point de position (1401) qui est projeté par le véhicule dans la voie adjacente sur l'égo-voie et qui satisfait à la condition prédéfinie en tant que point de commande au moment actuel.

2. Procédé selon la revendication 1, dans lequel la détermination séquentielle du point de commande au moment actuel sur la base d'informations de priorité prédéfinies de chaque premier objet dans les informations de milieu et les informations d'état comprend :
l'obtention d'un point de position (1401) correspondant à un premier objet ayant la priorité la plus élevée ;
le fait de déterminer si un second objet existe dans une zone prédéfinie, dans lequel le second objet est un objet à éviter pour l'égo-véhicule (401) dans les informations de milieu ; et
la réalisation d'un traitement de décalage sur le point de position (1401) correspondant au premier objet lorsque le second objet existe, et l'utilisation d'un point de position décalé (1403 ; 1406) en tant que point de commande au moment actuel.

3. Procédé selon la revendication 2, dans lequel le second objet comprend une limite fixe de l'égo-voie, et la zone prédéfinie est une zone qui a une taille prédéfinie et qui est centrée sur le point de position (1401) correspondant au premier objet ; et
la réalisation d'un traitement de décalage sur le point de position (1401) correspondant au premier objet lorsque le second objet existe, et l'utilisation d'un point de position décalé (1403 ; 1406) en tant que point de commande au moment actuel :
lorsque la limite fixe de l'égo-voie existe, la réalisation d'un traitement de décalage sur le point de position (1401) correspondant au premier objet, de sorte que la limite fixe se trouve en dehors d'une zone de la taille prédéfinie centrée sur le point de position décalé (1403 ; 1406), et le point de position décalé (1403 ; 1406) se trouve dans l'égo-voie ; et
l'utilisation du point de position décalé (1403 ; 1406) en tant que point de commande au moment actuel.

4. Procédé selon la revendication 2, dans lequel le second objet comprend un obstacle (1402 ; 1405) ; et la zone prédéfinie est une zone d'une taille prédéfinie devant l'égo-véhicule (401) dans l'égo-voie ; et
la réalisation d'un traitement de décalage sur le point de position (1401) correspondant au premier objet lorsque le second objet existe, et l'utilisation d'un point de position décalé (1403 ; 1406) en tant que point de commande au moment actuel :
lorsque l'obstacle (1402 ; 1405) existe, la réalisation, sur la base d'informations de pondération correspondant à l'obstacle (1402 ; 1405), d'un traitement de décalage sur le point de position (1401) correspondant au premier objet, de sorte que l'obstacle (1402 ; 1405) se trouve à l'extérieur d'une zone de la taille prédéfinie centrée sur le point de position décalé (1403 ; 1406), et le point de position décalé (1403 ; 1406) se trouve dans l'égo-voie, dans lequel les informations de pondération indiquent un degré d'évitement de l'obstacle (1402 ; 1405) par l'égo-véhicule (401) ; et
l'utilisation du point de position décalé (1403 ; 1406) en tant que point de commande au moment actuel.

5. Procédé selon la revendication 4, dans lequel une valeur des informations de pondération est déterminée sur la base d'au moins l'un parmi un temps d'avance THW, un temps avant collision TTC et une largeur de véhicule envahissant IVW (701), dans lequel la valeur des informations de pondération est corrélée négativement avec le THW, corrélée négativement avec le TTC, et corrélée positivement avec l'IVW.

6. Procédé selon la revendication 1, dans lequel la génération d'une trajectoire de commande au moment actuel sur la base du point de commande, d'une trajectoire de commande à un moment antérieur et des informations d'état comprend :
la génération de la trajectoire de commande au moment actuel sur la base du point de commande, de la trajectoire de commande au moment antérieur et des informations d'état en utilisant un filtre de Kalman.

7. Appareil de conduite intelligente, dans lequel l'appareil comprend :
un module d'obtention (1701), configuré pour obtenir des informations de milieu environnant d'un égo-véhicule (401) à un moment actuel et des informations d'état de l'égo-véhicule (401) au moment actuel ;
un module de détermination (1702), configuré pour déterminer des points de commande au moment actuel sur la base des informations de milieu et des informations d'état ; et
un module de génération (1703), configuré pour générer une trajectoire de commande au moment actuel sur la base des points de commande, d'une trajectoire de commande à un moment antérieur et des informations d'état, dans lequel la trajectoire de commande représente une trajectoire utilisée pour guider le déplacement de l'égo-véhicule (401),
dans lequel le module de détermination (1702) est en outre configuré pour déterminer de manière séquentielle le point de commande au moment actuel sur la base d'informations de priorité prédéfinies de chaque premier objet dans les informations de milieu et les informations d'état,
dans lequel le premier objet comprend une ligne de délimitation des voies (403) d'une égo-voie, un véhicule cible et un véhicule dans une voie adjacente,
**caractérisé en ce que** des priorités de la ligne de délimitation des voies (403) de l'égo-voie, du véhicule cible et du véhicule dans la voie adjacente sont dans l'ordre décroissant ; et
le module de détermination (1702) est en outre configuré pour : lorsque la ligne de délimitation des voies (403) de l'égo-voie existe, utiliser un point de position (1401) qui correspond à une distance prédéfinie sur la ligne de délimitation des voies (403) de l'égo-voie et qui satisfait à une condition prédéfinie en tant que point de commande au moment actuel, dans lequel la distance prédéfinie est déterminée sur la base des informations d'état ; si la ligne de délimitation des voies (403) de l'égo-voie n'existe pas, lorsque le véhicule cible existe, utiliser un point de position (1401) qui correspond au véhicule cible et qui satisfait à la condition prédéfinie en tant que point de commande au moment actuel ; ou si ni la ligne de délimitation des voies (403) de l'égo-voie ni le véhicule cible n'existent, lorsqu'un véhicule existe dans la voie adjacente, utiliser un point de position (1401) qui est projeté par le véhicule dans la voie adjacente sur l'égo-voie et qui satisfait à la condition prédéfinie en tant que point de commande au moment actuel.

8. Appareil selon la revendication 7, dans lequel le module de détermination (1702) est en outre configuré pour : obtenir un point de position (1401) correspondant à un premier objet ayant la priorité la plus élevée ; déterminer si un second objet existe dans une zone prédéfinie, dans lequel le second objet est un objet d'évitement de l'égo-véhicule (401) dans les informations de milieu ; et réaliser un traitement de décalage sur le point de position (1401) correspondant au premier objet lorsque le second objet existe, et utiliser un point de position décalé (1403 ; 1406) en tant que point de commande au moment actuel.

9. Appareil selon la revendication 8, dans lequel le second objet comprend une limite fixe d'une égo-voie, et la zone prédéfinie est une zone qui a une taille prédéfinie et qui est centrée sur un point de position (1401) correspondant au premier objet ; et
le module de détermination (1702) est en outre configuré pour : lorsque la limite fixe de l'égo-voie existe, réaliser un traitement de décalage sur le point de position (1401) correspondant au premier objet, de sorte que la limite fixe se trouve à l'extérieur d'une zone de la taille prédéfinie centrée sur le point de position décalé (1403 ; 1406), et le point de position décalé (1403 ; 1406) se trouve dans l'égo-voie ; et utiliser le point de position décalé (1403 ; 1406) en tant que point de commande au moment actuel.

10. Appareil selon la revendication 8, dans lequel le second objet comprend un obstacle (1402 ; 1405) ; et la zone prédéfinie est une zone d'une taille prédéfinie devant l'égo-véhicule (401) dans l'égo-voie ; et
le module de détermination (1702) est en outre configuré pour : lorsque l'obstacle (1402 ; 1405) existe, réaliser, sur la base des informations de pondération correspondant à l'obstacle (1402 ; 1405), un traitement de décalage sur le point de position (1401) correspondant au premier objet, de sorte que l'obstacle (1402 ; 1405) se trouve à l'extérieur d'une zone de la taille prédéfinie centrée sur le point de position décalé (1403 ; 1406), et le point de position décalé (1403 ; 1406) se trouve dans l'égo-voie, dans lequel les informations de pondération indiquent un degré d'évitement de l'obstacle (1402 ; 1405) par l'égo-véhicule (401) ; et utiliser le point de position décalé (1403 ; 1406) en tant que point de commande au moment actuel.
